(19) Europäisches Patentamt
European Patent Office
Office européen des brevets

(11) EP 4 596 635 A1

(12) EUROPEAN PATENT APPLICATION
published in accordance with Art. 153(4) EPC

(43) Date of publication:
**06.08.2025 Bulletin 2025/32**

(21) Application number: **23871583.3**

(22) Date of filing: **23.08.2023**

(51) International Patent Classification (IPC):
***C08L 101/00*** *(2006.01)* ***C08K 3/013*** *(2018.01)*
***C08K 5/521*** *(2006.01)* ***C08K 7/02*** *(2006.01)*
***C08L 25/06*** *(2006.01)* ***C08L 25/12*** *(2006.01)*
***C08L 55/02*** *(2006.01)* ***C08L 67/00*** *(2006.01)*
***C08L 69/00*** *(2006.01)*

(52) Cooperative Patent Classification (CPC):
**C08K 3/013; C08K 5/521; C08K 7/02; C08L 25/06; C08L 25/12; C08L 55/02; C08L 67/00; C08L 69/00; C08L 101/00**

(86) International application number:
**PCT/JP2023/030272**

(87) International publication number:
**WO 2024/070342 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.09.2022 JP 2022153614**
**11.11.2022 JP 2022180866**
**22.11.2022 JP 2022186119**

(71) Applicant: **Teijin Limited**
**Osaka-shi, Osaka 530-0005 (JP)**

(72) Inventors:
- **ONIZAWA, Tomomitsu**
  **Osaka-shi, Osaka 530-0005 (JP)**
- **MORI, Yoshiaki**
  **Osaka-shi, Osaka 530-0005 (JP)**
- **MITSUNAGA, Masaki**
  **Osaka-shi, Osaka 530-0005 (JP)**

(74) Representative: **Kraus & Lederer PartGmbB**
**Thomas-Wimmer-Ring 15**
**80539 München (DE)**

# (54) THERMOPLASTIC RESIN COMPOSITION AND MOLDED ARTICLE COMPRISING SAME

(57) The present invention provides a thermoplastic resin composition which undergoes little discoloration or strength reduction even under harsh processing conditions, and exhibits excellent recyclability, and a molded article comprising same. The composition according to the present invention contains (B) an acidic phosphate ester having an acid value of 10 to 200 mgKOH/g (component B) at a quantity of 0.001 to 1 part by weight relative to 100 parts by weight of (A) a thermoplastic resin (component A). This composition further contains, relative to 100 parts by weight of component A, 1 to 150 parts by weight of (C) an inorganic filler (component C) and/or 0.01 to 25 parts by weight of (D) a flame retardant (component D).

EP 4 596 635 A1

## Description

FIELD

The present invention relates to a thermoplastic resin composition that exhibits little discoloration or degradation of strength during molding and a molded article formed from the same. More specifically, the present invention relates to a thermoplastic resin composition that exhibits little discoloration or strength degradation, even under severe processing conditions and has excellent recyclability and a molded article formed from the same.

BACKGROUND

Thermoplastic resin compositions are used in a wide range of fields, such as housings and parts for electrical, electronic, and OA devices; interior and exterior parts for automobiles; furniture, musical instruments, and miscellaneous goods. Particularly in recent years, for achieving a sustainable society, high recyclability for thermoplastic resin compositions is desired. The use of phosphorus-based compounds as thermal stabilizers in thermoplastic resin compositions has been widely known. PTL 1 discloses that specific phosphorus-based compounds are used in resins composed of polycarbonate-based resins and polyester resins. PTL 2 discloses that phosphorus-based compounds are used in combination. However, thermal stability during molding is still insufficient in existing methods. Molding conditions tend to be at high temperatures, and the number of cases where thermal stability is insufficient have increased, particularly in applications where a thin and lightweight form is required. Furthermore, the demand to recycle and reuse products is high, and the need to propose materials that can satisfy the demand for a thermoplastic resin composition that exhibits no discoloration and degradation in strength, even under severe processing conditions and has excellent recyclability is increasing.

[CITATION LIST]

[PATENT LITERATURE]

[PTL 1] Japanese Patent Publication No. 4983427
[PTL 2] Japanese Patent Publication No. 5640734

SUMMARY

[TECHNICAL PROBLEM]

An object of the present invention is to provide a thermoplastic resin composition that exhibits little discoloration or strength degradation, even under severe processing conditions and has excellent recyclability and a molded article formed from the same.

[SOLUTION TO PROBLEM]

The present inventors, as a result of intensive research to achieve the above object, have discovered that by blending an acidic phosphate ester having a specific acid value into a thermoplastic resin, a thermoplastic resin composition that exhibits little discoloration or strength degradation, even under severe processing conditions and has excellent recyclability and a molded article formed from the same can be provided, and have completed the present invention. In another embodiment, it was discovered that by adding an inorganic filler and/or a flame retardant in addition to an acidic phosphate ester having a specific acid value, a thermoplastic resin composition wherein rigidity is increased and flame retardancy is increased, in addition to being prevented from discoloration and strength degradation, and a molded article formed from the same can be provided.

Specifically, the present invention is as follows.

1. A thermoplastic resin composition containing, relative to 100 parts by weight of (A) a thermoplastic resin (component A), 0.001 to 1 part by mass of (B) an acidic phosphate ester (component B) having an acid value of 10 to 200 mgKOH/g.
2. The thermoplastic resin composition according to the item 1, containing, relative to 100 parts by weight of the

component A, 1 to 150 parts by weight of (C) an inorganic filler (component C).
3. The thermoplastic resin composition according to the item 1 or 2, containing, relative to 100 parts by weight of the component A, 0.01 to 25 parts by weight of (D) a flame retardant (component D).
4. The thermoplastic resin composition according to any one of the items 1 to 3, containing, relative to 100 parts by weight of the component A, 0.05 to 3 parts by weight of (E) an anti-drip agent (component E).
5. The thermoplastic resin composition according to any one of the items 1 to 4, wherein the component A is at least one thermoplastic resin selected from the group consisting of (A-1) a polycarbonate resin (component A-1), (A-2) an ABS resin (component A-2), (A-3) a polyester resin (component A-3), (A-4) an AS resin (component A-4), (A-5) a PS resin (component A-5), and (A-6) an AAS resin (component A-6).
6. The thermoplastic resin composition according to any one of the items 1 to 5, wherein the component A is at least one thermoplastic resin selected from the group consisting of (A-1) a polycarbonate resin (component A-1), (A-2) an ABS resin (component A-2), and (A-3) a polyester resin (component A-3).
7. The thermoplastic resin composition according to any one of the items 1 to 6, wherein a content of the component A-1 is 40 to 100 parts by weight in 100 parts by weight of the component A.
8. The thermoplastic resin composition according to any one of the items 1 to 7, wherein the component B is stearyl acid phosphate.
9. The thermoplastic resin composition according to any one of the items 1 to 8, wherein the component C is at least one inorganic filler selected from the group consisting of (C-1) a glass fiber (component C-1), (C-2) a tabular glass filler (component C-2), (C-3) a fibrous carbon filler (component C-3), (C-4) a non-fibrous carbon filler (component C-4), and (C-5) a silicate mineral (component C-5).
10. The thermoplastic resin composition according to any one of the items 1 to 9, wherein the component D is at least one flame retardant selected from the group consisting of (D-1) a halogenated carbonate compound (component D-1), (D-2) a phosphate ester-based compound (component D-2), (D-3) a phosphazene compound (component D-3), (D-4) a metal sulfonate (component D-4), and (D-5) a silicone compound (component D-5).
11. A molded article formed of the thermoplastic resin composition according to any one of the items 1 to 10.

[ADVANTAGEOUS EFFECTS OF INVENTION]

The thermoplastic resin composition of the present invention is a thermoplastic resin composition that exhibits little discoloration or strength degradation, even under severe processing conditions and has excellent recyclability, and thus is useful in applications where a thin and lightweight form is required under high-temperature molding conditions and in cases where products are recycled and reused. The industrial effect brought about thereby is very significant.

DESCRIPTION OF EMBODIMENTS

Hereinafter, the present invention will be described in detail.

<Component A: thermoplastic resin>

The thermoplastic resin used as component A in the present invention is a polycarbonate resin, an ABS resin, a polyester resin, an AS resin, a PS resin, an AAS resin, an AES resin, a polyamide resin, a polyolefin resin, a fluorine-based resin, a PPS resin, a PEEK resin, a polyarylate resin, or a polyacetal resin, and is preferably at least one thermoplastic resin selected from the group consisting of a polycarbonate resin, an ABS resin, a polyester resin, an AS resin, a PS resin, and an AAS resin. Further, it is more preferable that the component A be at least one thermoplastic resin selected from the group consisting of a polycarbonate resin, an ABS resin, and a polyester resin, and the content of polycarbonate resin be 40 to 100 parts by weight in 100 parts by weight of the component A. In addition, the content of polycarbonate resin is more preferably 60 to 100 parts by weight in 100 parts by weight of the component A.

<Component A-1: polycarbonate resin>

The polycarbonate resin used as component A-1 in the present invention is obtained by reacting a dihydric phenol with a carbonate precursor. Examples of the reaction method can include interfacial polymerization, melt transesterification, solid-phase transesterification of a carbonate prepolymer, and ring-opening polymerization of a cyclic carbonate compound.

Representative examples of the dihydric phenol used herein include hydroquinone, resorcinol, 4,4'-biphenol, 1,1-bis(4-hydroxyphenyl)ethane, 2,2-bis(4-hydroxyphenyl)propane (commonly known as bisphenol A), 2,2-bis(4-hydroxy-3-methylphenyl)propane, 2,2-bis(4-hydroxyphenyl)butane, 1,1-bis(4-hydroxyphenyl)-1-phenylethane, 1,1-bis(4-hydroxyphenyl)cyclohexane, 1,1-bis(4-hydrophenyl)-3,3,5-trimethylcyclohexane, 2,2-bis(4-hydroxyphenyl)pentane,

4,4'-(p-phenylenediisopropylidene)diphenol, 4,4'-(m-phenylenediisopropylidene)diphenol, 1,1-bis(4-hydroxyphenyl)-4-isopropylcyclohexane, bis(4-hydroxyphenyl)oxide, bis(4-hydroxyphenyl)sulfide, bis(4-hydroxyphenyl)sulfoxide, bis(4-hydroxyphenyl)sulfone, bis(4-hydroxyphenyl)ketone, bis(4-hydroxyphenyl)ester, bis(4-hydroxy-3-methylphenyl)sulfide, 9,9-bis(4-hydroxyphenyl)fluorene, and 9,9-bis(4-hydroxy-3-methylphenyl)fluorene. The preferable dihydric phenol is bis(4-hydroxyphenyl)alkane. Among these, bisphenol A is particularly preferable from the viewpoint of impact resistance, and therefore is generally used.

In the present invention, in addition to bisphenol A-based polycarbonate resins, which are general-purpose polycarbonate resins, special polycarbonate reins manufactured using other dihydric phenols can be used as the component A-1. For example, polycarbonate resins (homopolymer or copolymer) using 4,4'-(m-phenylenediisopropylidene)diphenol (hereinafter, sometimes abbreviated as "BPM"), 1,1-bis(4-hydroxyphenyl)cyclohexane, 1,1-bis(4-hydroxyphenyl)-3,3,5-trimethylcyclohexane (hereinafter, sometimes abbreviated as "Bis-TMC"), 9,9-bis(4-hydroxyphenyl) fluorene, and 9,9-bis(4-hydroxy-3-methylphenyl)fluorene (hereinafter, sometimes abbreviated as "BCF") as a part or all of the dihydric phenol component are appropriate for applications where the requirements for dimensional change due to water absorption and shape stability are particularly strict. The dihydric phenol other than BPA is preferably used in an amount of 5 mol% or greater, particularly 10 mol% or greater, of the entire dihydric phenol component constituting the polycarbonate resin. In particular, when high rigidity and more satisfactory hydrolysis resistance are required, it is particularly preferred that the component A constituting the resin composition be a copolymer polycarbonate resin of the following (1) to (3).

(1) A copolymer polycarbonate resin in which, in 100 mol% of the dihydric phenol component constituting the polycarbonate resin, BPM is 20 to 80 mol% (more preferably 40 to 75 mol%, even more preferably 45 to 65 mol%) and BCF is 20 to 80 mol% (more preferably 25 to 60 mol%, even more preferably 35 to 55 mol%).

(2) A copolymer polycarbonate resin in which, in 100 mol% of the dihydric phenol component constituting the polycarbonate resin, BPA is 10 to 95 mol% (more preferably 50 to 90 mol%, even more preferably 60 to 85 mol%) and BCF is 5 to 90 mol% (more preferably 10 to 50 mol%, even more preferably 15 to 40 mol%).

(3) A copolymer polycarbonate resin in which, in 100 mol% of the dihydric phenol component constituting the polycarbonate resin, BPM is 20 to 80 mol% (more preferably 40 to 75 mol%, even more preferably 45 to 65 mol%) and Bis-TMC is 20 to 80 mol% (more preferably 25 to 60 mol%, even more preferably 35 to 55 mol%).

These special polycarbonate resins may be used independently, or may be used by appropriately mixing two or more thereof. These can also be used in combination by mixing with a generally used bisphenol A type polycarbonate resin. The manufacturing methods and characteristics of these special polycarbonate resins are described in detail in, for example, Japanese Unexamined Patent Publication (Kokai) No. 6-172508, Japanese Unexamined Patent Publication (Kokai) No. 8-27370, Japanese Unexamined Patent Publication (Kokai) No. 2001-55435, and Japanese Unexamined Patent Publication (Kokai) No. 2002-117580.

Among the various polycarbonate resins described above, those having water absorption rate and Tg (glass transition temperature) within the following ranges by adjusting the copolymer composition have satisfactory hydrolysis resistance of the polymer itself and are particularly excellent in terms of low warping after molding, and thus are particularly preferred in fields where shape stability is required.

(i) Polycarbonate resins in which water absorption rate is 0.05 to 0.15%, preferably 0.06 to 0.13%, and Tg is 120 to 180°C, or

(ii) polycarbonate resins in which Tg is 160 to 250°C, preferably 170 to 230°C, and water absorption rate is 0.10 to 0.30%, preferably 0.13 to 0.30%, and more preferably 0.14 to 0.27%.

The water absorption rate of the polycarbonate resin is a value obtained by using a disk-like test piece having a diameter of 45 mm and a thickness of 3.0 mm and measuring the water content after immersion in water at 23°C for 24 h in accordance with ISO 62-1980. The Tg (glass transition temperature) is a value determined by differential scanning calorimetry (DSC) in accordance with JIS K7121.

As the carbonate precursor, a carbonyl halide, carbonic acid diester, or haloformate is used. Specific examples include phosgene, diphenyl carbonate, and dihaloformates of dihydric phenols.

When the polycarbonate resin is manufactured by a method of interfacial polymerization of the dihydric phenol and carbonate precursor, a catalyst, a terminating agent, and an antioxidant for preventing oxidation of the dihydric phenol may be used as needed. The polycarbonate resin in the present invention includes branched polycarbonate resins copolymerized with a trifunctional or higher polyfunctional aromatic compound, polyester carbonate resins copolymerized with an aromatic or aliphatic (including alicyclic) bifunctional carboxylic acid, copolymer polycarbonate resins copolymerized with a bifunctional alcohol (including alicyclic), and polyester carbonate resins copolymerized with both of such a

bifunctional carboxylic acid and a bifunctional alcohol. The polycarbonate resin may be a mixture in which two or more of obtained polycarbonate resins are mixed.

The branched polycarbonate resin can impart an anti-drip performance to the thermoplastic resin composition of the present invention. Examples of trifunctional or higher polyfunctional aromatic compounds used in such a branched polycarbonate resin include phloroglucine, phloroglucide, trisphenols such as 4,6-dimethyl-2,4,6-tris(4-hydroxydiphenyl) heptene-2, 2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane, 2,6-bis(2-hydroxy-5-methylbenzyl)-4-methylphenol, and 4-{4-[1,1-bis(4-hydroxyphenyl)ethyl]benzene}-α,α-dimethylbenzylphenol; tetra(4-hydroxyphenyl)methane, bis(2,4-dihydroxyphenyl)ketone, 1,4-bis(4,4-dihydroxytriphenylmethyl)benzene; trimellitic acid, pyromellitic acid, benzophenonetetracarboxylic acid, and acid chlorides thereof. Among these, 1,1,1-tris(4-hydroxyphenyl)ethane and 1,1,1-tris(3,5-dimethyl-4-hydroxyphenyl)ethane are preferable, and 1,1,1-tris(4-hydroxyphenyl)ethane is particularly preferable.

The structural units derived from the polyfunctional aromatic compound in the branched polycarbonate resin are preferably 0.01 to 1 mol%, more preferably 0.05 to 0.9 mol%, and even more preferably 0.05 to 0.8 mol% in a total of 100 mol% of the structural units derived from the dihydric phenol and the structural units derived from such a polyfunctional aromatic compound. Particularly in the case of a melt transesterification method, as a side reaction, branched structural units may be generated, and it is preferable that the amount of such branched structural units be preferably 0.001 to 1 mol%, more preferably 0.005 to 0.9 mol%, and even more preferably 0.01 to 0.8 mol% in a total of 100 mol% of the structural units derived from the dihydric phenol and the branched structural units. The ratio of such branched structures can be calculated from $^1$H-NMR measurements.

The aliphatic bifunctional carboxylic acid is preferably an α,ω-dicarboxylic acid. Examples of the aliphatic bifunctional carboxylic acid preferably include linear saturated aliphatic dicarboxylic acids such as sebacic acid (decanedioic acid), dodecanedioic acid, tetradecanedioic acid, octadecanedioic acid and eicosanedioic acid; and alicyclic dicarboxylic acids such as cyclohexanedicarboxylic acid. As the bifunctional alcohol, alicyclic diols are more preferred, and are exemplified by, for example, cyclohexanedimethanol, cyclohexanediol, and tricyclodecanedimethanol.

Reaction modes such as interfacial polymerization, melt transesterification, solid-phase transesterification of a carbonate prepolymer, and ring-opening polymerization of a cyclic carbonate compound, which are methods of manufacturing the polycarbonate resin in the present invention, are methods that are well known in various literatures and patent publications.

When manufacturing the thermoplastic resin composition of the present invention, the viscosity average molecular weight of the polycarbonate resin is preferably 12,500 to 32,000, more preferably 16,000 to 28,000, and even more preferably 18,000 to 26,000. In a polycarbonate resin having a viscosity average molecular weight of less than 12,500, satisfactory mechanical properties may not be obtained. In a resin composition obtained from a polycarbonate resin having a viscosity average molecular weight of greater than 32,000, moldability may be inferior.

For the viscosity average molecular weight referred to in the present invention, a specific viscosity (ηSP) to be calculated by the following formula is determined from a solution having 0.7 g of the polycarbonate dissolved in 100 ml of methylene chloride at 20°C using an Ostwald viscometer,

$$\text{Specific viscosity } (\eta SP) = (t - t_0)/t_0$$

[$t_0$ is number of seconds to drop methylene chloride, and t is number of seconds to drop the sample solution.]
and from the resulting specific viscosity (ηSP), a viscosity average molecular weight M is calculated by the following mathematical formula.

$$\eta SP/c = [\eta] + 0.45 \times [\eta]^2 c$$

(where [η] is the intrinsic viscosity)

$$[\eta] = 1.23 \times 10^{-4} M^{0.83}$$

$$c = 0.7$$

The viscosity average molecular weight of the polycarbonate resin in the thermoplastic resin composition of the present invention is calculated by the following procedure. Specifically, the composition is mixed with 20- to 30-fold in weight of methylene chloride, and soluble portion in the composition is dissolved. The soluble portion is collected by celite

filtration. The solvent in the resulting solution is then removed. The solid after solvent removal is thoroughly dried to obtain a solid of the component to be dissolved in methylene chloride. From a solution having 0.7 g of the solid dissolved in 100 ml of methylene chloride, a specific viscosity at 20°C is determined in the same manner as described above, and from the specific viscosity, a viscosity average molecular weight M is calculated in the same manner as described above.

A polycarbonate-polydiorganosiloxane copolymer resin can also be used as the polycarbonate resin in the present invention. The polycarbonate-polydiorganosiloxane copolymer resin is preferably a copolymer resin prepared by copolymerizing a dihydric phenol represented by general formula (1) below and a hydroxyaryl-terminated polydiorganosiloxane represented by general formula (3) below.

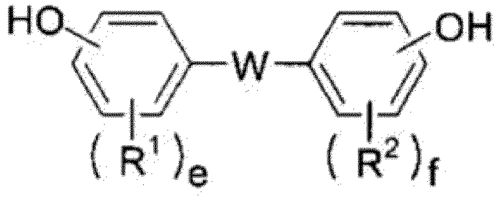

(1)

In the above general formula (1), $R^1$ and $R^2$ each independently represent a hydrogen atom, a halogen atom, or a group selected from the group consisting of an alkyl group having 1 to 18 carbon atoms, an alkoxy group having 1 to 18 carbon atoms, a cycloalkyl group having 6 to 20 carbon atoms, a cycloalkoxy group having 6 to 20 carbon atoms, an alkenyl group having 2 to 10 carbon atoms, an aryl group having 6 to 14 carbon atoms, an aryloxy group having 6 to 14 carbon atoms, an aralkyl group having 7 to 20 carbon atoms, an aralkyloxy group having 7 to 20 carbon atoms, a nitro group, an aldehyde group, a cyano group, and a carboxy group, and if there are a plurality of $R^1$ or $R^2$, they may be the same or different; e and f are each an integer of 1 to 4; and W is a single bond or at least one group selected from the group consisting of groups represented by general formula (2) below.

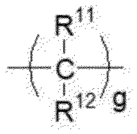 , 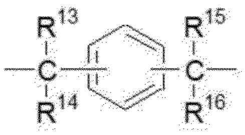 , 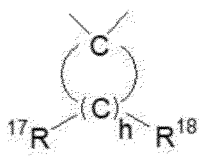 , 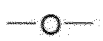 , 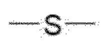

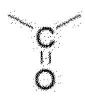 , 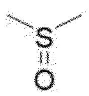 , 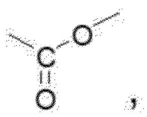 , 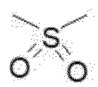 , 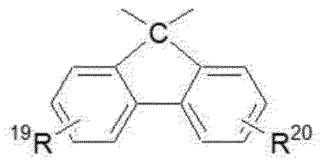

(2)

In the above general formula (2), $R^{11}$, $R^{12}$ $R^{13}$, $R^{14}$, $R^{15}$, $R^{16}$, $R^{17}$, and $R^{18}$ each independently represent a hydrogen atom or a group selected from the group consisting of an alkyl group having 1 to 18 carbon atoms, an aryl group having 6 to 14 carbon atoms, and an aralkyl group having 7 to 20 carbon atoms; $R^{19}$ and $R^{20}$ each independently represent a hydrogen atom, a halogen atom, or a group selected from the group consisting of an alkyl group having 1 to 18 carbon atoms, an alkoxy group having 1 to 10 carbon atoms, a cycloalkyl group having 6 to 20 carbon atoms, a cycloalkoxy group having 6 to 20 carbon atoms, an alkenyl group having 2 to 10 carbon atoms, an aryl group having 6 to 14 carbon atoms, an aryloxy group having 6 to 10 carbon atoms, an aralkyl group having 7 to 20 carbon atoms, an aralkyloxy group having 7 to 20 carbon atoms, a nitro group, an aldehyde group, a cyano group, and a carboxy group, and if there are a plurality of $R^{19}$ and $R^{20}$ they may be the same or different; g is an integer of 1 to 10; and h is an integer of 4 to 7.

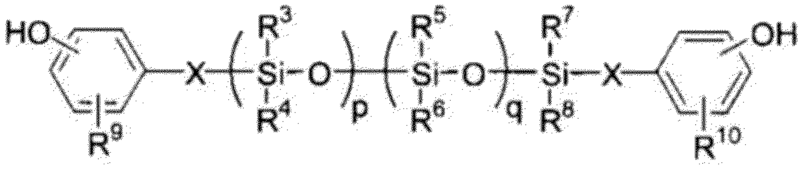

(3)

In the above general formula (3), $R^3$, $R^4$, $R^5$, $R^6$, $R^7$, and $R^8$ are each independently a hydrogen atom, an alkyl group having 1 to 12 carbon atoms, or a substituted or unsubstituted aryl group having 6 to 12 carbon atoms; $R^9$ and $R^{10}$ are each independently a hydrogen atom, a halogen atom, an alkyl group having 1 to 10 carbon atoms, or an alkoxy group having 1 to 10 carbon atoms; p is a natural number; q is 0 or a natural number; and p + q is a natural number of 10 to 300. X is a

divalent aliphatic group having 2 to 8 carbon atoms.

Examples of the dihydric phenol (I) represented by general formula (1) include 4,4'-dihydroxybiphenyl, bis(4-hydroxyphenyl)methane, 1,1-bis(4-hydroxyphenyl)ethane, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)-3,3,5-trimethylcyclohexane, 2,2-bis(4-hydroxy-3,3'-biphenyl)propane, 2,2-bis(4-hydroxy-3-isopropylphenyl)propane, 2,2-bis(3-t-butyl-4-hydroxyphenyl)propane, 2,2-bis(4-hydroxyphenyl)butane, 2,2-bis(4-hydroxyphenyl)octane, 2,2-bis(3-bromo-4-hydroxyphenyl)propane, 2,2-bis(3,5-dimethyl-4-hydroxyphenyl)propane, 2,2-bis(3-cyclohexyl-4-hydroxyphenyl)propane, 1,1-bis(3-cyclohexyl-4-hydroxyphenyl)cyclohexane, bis(4-hydroxyphenyl)diphenylmethane, 9,9-bis(4-hydroxyphenyl)fluorene, 9,9-bis(4-hydroxy-3-methylphenyl)fluorene, 1,1-bis(4-hydroxyphenyl)cyclohexane, 1,1-bis(4-hydroxyphenyl)cyclopentane, 4,4'-dihydroxydiphenyl ether, 4,4'-dihydroxy-3,3'-dimethyldiphenyl ether, 4,4'-sulfonyldiphenol, 4,4'-dihydroxydiphenyl sulfoxide, 4,4'-dihydroxydiphenyl sulfide, 2,2'-dimethyl-4,4'-sulfonyldiphenol, 4,4'-dihydroxy-3,3'-dimethyldiphenyl sulfoxide, 4,4'-dihydroxy-3,3'-dimethyldiphenyl sulfide, 2,2'-diphenyl-4,4'-sulfonyldiphenol, 4,4'-dihydroxy-3,3'-diphenyldiphenyl sulfoxide, 4,4'-dihydroxy-3,3'-diphenyldiphenyl sulfide, 1,3-bis{2-(4-hydroxyphenyl)propyl}benzene, 1,4-bis{2-(4-hydroxyphenyl)propyl}benzene, 1,4-bis(4-hydroxyphenyl)cyclohexane, 1,3-bis(4-hydroxyphenyl)cyclohexane, 4,8-bis(4-hydroxyphenyl)tricyclo[5.2.1.02,6]decane, 4,4'-(1,3-adamantanediyl)diphenol, and 1,3-bis(4-hydroxyphenyl)-5,7-dimethyladamantane.

Among these, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)cyclohexane, 1,1-bis(4-hydroxyphenyl)-3,3,5-trimethylcyclohexane, 4,4'-sulfonyldiphenol, 2,2'-dimethyl-4,4'-sulfonyldiphenol, 9,9-bis(4-hydroxy-3-methylphenyl)fluorene, 1,3-bis{2-(4-hydroxyphenyl)propyl}benzene, and 1,4-bis{2-(4-hydroxyphenyl)propyl}benzene are preferable, and 2,2-bis(4-hydroxyphenyl)propane, 1,1-bis(4-hydroxyphenyl)cyclohexane (BPZ), and 4,4'-sulfonyldiphenol, and 9,9-bis(4-hydroxy-3-methylphenyl)fluorene are particularly preferable. Among these, 2,2-bis(4-hydroxyphenyl)propane, which has excellent strength and satisfactory durability, is the most preferred. These dihydric phenols may be used independently or in combination of two or more.

As the hydroxyaryl-terminated polydiorganosiloxane represented by general formula (3) above, for example, the compounds shown below are preferably used.

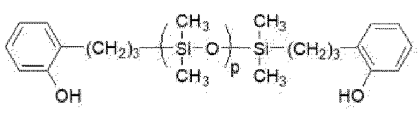
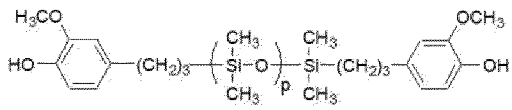

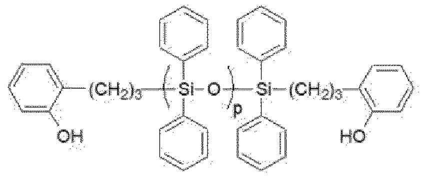
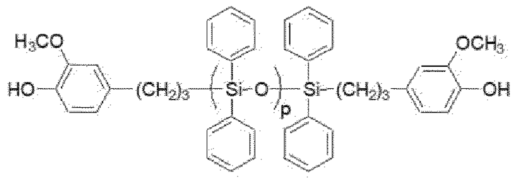

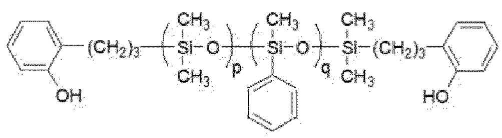
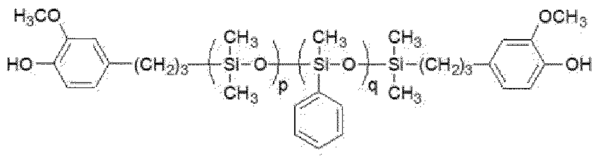

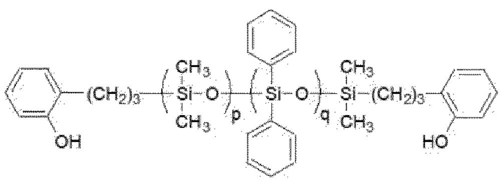
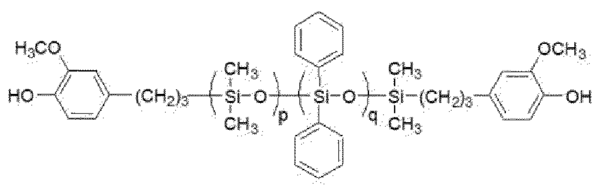

The hydroxylaryl-terminated polydiorganosiloxane (II) is easily manufactured by subjecting a phenol having an olefinically unsaturated carbon-carbon bond, preferably a vinylphenol, 2-allylphenol, isopropenylphenol, or 2-methoxy-4-allylphenol, to a hydrosilylation reaction at the end of a polysiloxane chain having a predetermined degree of polymerization. Among these, (2-allylphenol)-terminated polydiorganosiloxane and (2-methoxy-4-allylphenol)-terminated polydiorganosiloxane are preferable, and (2-allylphenol)-terminated polydimethylsiloxane and (2-methoxy-4-allylphenol)-terminated polydimethylsiloxane are particularly preferable. For the hydroxyaryl-terminated polydiorganosiloxane (II), the molecular weight distribution (Mw/Mn) is preferably 3 or less. To further exhibit excellent low-outgassing property during high-temperature molding and low-temperature impact resistance, the molecular weight distribution (Mw/Mn) is more preferably 2.5 or less, and even more preferably 2 or less. When the upper limit of such a preferred range is exceeded, the amount of outgas generated during high-temperature molding is large, and low-temperature impact resistance may be inferior.

It is suitable that a diorganosiloxane degree of polymerization (p + q) of the hydroxyaryl-terminated polydiorganosiloxane (II) for achieving a high level of impact resistance be 10 to 300. The diorganosiloxane degree of polymerization (p + q) is preferably 10 to 200, more preferably 12 to 150, and even more preferably 14 to 100. Below the lower limit of such a preferred range, impact resistance as a characteristic of the polycarbonate-polydiorganosiloxane copolymer is not effectively exhibited, and when the upper limit of such a preferred range is exceeded, poor appearance occurs.

The polydiorganosiloxane content in terms of the total weight of the polycarbonate-polydiorganosiloxane copolymer used in the component A-1 is preferably 0.1 to 50% by weight. Such polydiorganosiloxane component content is more preferably 0.5 to 30% by weight, and even more preferably 1 to 20% by weight. Above the lower limit of such a preferred range, excellent impact resistance and flame retardancy are likely to be obtained, and below the upper limit of such a preferred range, a stable appearance that is not easily affected by molding conditions is likely to be obtained. The polydiorganosiloxane degree of polymerization and the polydiorganosiloxane content can be calculated from $^1$H-NMR measurements.

For the hydroxyaryl-terminated polydiorganosiloxane (II) in the present invention, one type may be used alone, or two or more types may be used.

Other comonomers in addition to the dihydric phenol (I) and the hydroxyaryl-terminated polydiorganosiloxane (II) can also be used in combination in the range of 10% by weight or less relative to the total weight of the copolymer, in a range that does not impede the present invention.

In the present invention, the mixed solution comprising an oligomer having a terminal chloroformate group is prepared in advance by reacting a dihydric phenol (I) with a carbonate ester-forming compound in a mixed liquid of an organic solvent that is insoluble in water and an alkali aqueous solution.

When forming an oligomer of the dihydric phenol (I), the entire amount of the dihydric phenol (I) used in the method of the present invention may be converted into an oligomer at once, or a portion thereof may be added as a post-addition monomer to an interfacial polycondensation reaction in the latter stage as a reaction raw material. The post-addition monomer is added to quickly advance the polycondensation reaction in the latter stage, and if not necessary, the addition thereof is not required.

The method of the oligomer formation reaction is not particularly limited. However, a method of carrying out the reaction in a solvent in the presence of an acid binder is generally preferred.

The ratio of the carbonate ester-forming compound used needs only to be appropriately adjusted in consideration of the stoichiometric ratio (equivalence) of the reaction. When a gaseous carbonate ester-forming compound such as phosgene is used, a method of blowing the gaseous compound into the reaction system is preferably adopted.

As the acid binder, for example, an alkali metal hydroxide such as sodium hydroxide or potassium hydroxide, an alkali metal carbonate such as sodium carbonate or potassium carbonate, an organic base such as pyridine, or a mixture thereof can be used. The ratio of the acid binder used needs only to be appropriately determined in consideration of the stoichiometric ratio (equivalence) of the reaction, in the same manner described above. Specifically, it is preferable that 2 equivalents or a slightly excess amount of the acid binder relative to the number of moles (generally 1 mol corresponding to 2 equivalents) of the dihydric phenol (I) used to form the oligomer be used.

The solvent needs only to be a solvent inert to various reactions, such as those used in the manufacture of known polycarbonates, alone or as a mixed solvent. Representative examples include hydrocarbon solvents such as xylene, and halogenated hydrocarbon solvents such as methylene chloride and chlorobenzene. Particularly, halogenated hydrocarbon solvents such as methylene chloride are preferably used.

The reaction pressure for oligomer formation is not particularly limited, and may be any of normal pressure, elevated pressure, or reduced pressure, but carrying out the reaction under normal pressure is generally advantageous. The reaction temperature is selected from a range of -20 to 50°C, and since heat is generated during polymerization in many cases, water cooling or ice cooling is desirable. The reaction time depends on other conditions and cannot be generally defined, but the reaction is generally carried out for 0.2 to 10 h. The pH range for the oligomer formation reaction is the same as known interfacial reaction conditions, and the pH is always adjusted to 10 or higher.

In the present invention, after a mixed solution comprising an oligomer of dihydric phenol (I) having terminal chloroformate groups in such a manner, the mixed solution is stirred while adding hydroxyaryl-terminated polydiorganosiloxane (II) represented by general formula (3), which has been highly purified to a molecular weight distribution (Mw/Mn) of 3 or less, to the dihydric phenol (I), and the hydroxyaryl-terminated polydiorganosiloxane (II) and the oligomer are subjected to interfacial polycondensation to obtain a polycarbonate-polydiorganosiloxane polymer.

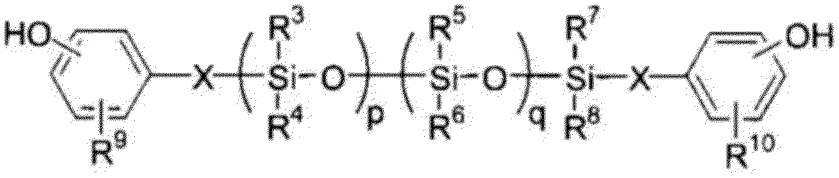

(3)

In the above general formula (3), $R^3$, $R^4$, $R^5$, $R^6$, $R^7$, and $R^8$ are each independently a hydrogen atom, an alkyl group having 1 to 12 carbon atoms, or a substituted or unsubstituted aryl group having 6 to 12 carbon atoms; $R^9$ and $R^{10}$ are each independently a hydrogen atom, a halogen atom, an alkyl group having 1 to 10 carbon atoms, or an alkoxy group having 1 to 10 carbon atoms; p is a natural number; q is 0 or a natural number; and p + q is a natural number of 10 to 300. X is a divalent aliphatic group having 2 to 8 carbon atoms.

When carrying out the interfacial polycondensation reaction, an acid binder may be appropriately added in consideration of the stoichiometric ratio (equivalence) of the reaction. As the acid binder, for example, an alkali metal hydroxide such as sodium hydroxide or potassium hydroxide, an alkali metal carbonate such as sodium carbonate or potassium carbonate, an organic base such as pyridine, or a mixture thereof is used. Specifically, it is preferable that 2 equivalents or an excess amount therefrom of alkali relative to the number of moles (generally 1 mol corresponding to 2 equivalents) of the hydroxyaryl-terminated polydiorganosiloxane (II) to be used, or when a portion of the dihydric phenol (I) as described above is added to this reaction stage as a post-addition monomer, the total number of moles of the post-addition dihydric phenol (I) and the hydroxyaryl-terminated polydiorganosiloxane (II), be used.

The polycondensation by the interfacial polycondensation reaction between the oligomer of the dihydric phenol (I) and the hydroxyaryl-terminated polydiorganosiloxane (II) is carried out by vigorous stirring of the above mixed liquid.

In such a polymerization reaction, a terminating agent or a molecular weight modifier is generally used. Examples of the terminating agent include compounds having a monohydric phenolic hydroxyl group, and in addition to ordinary phenols, p-tert-butylphenol, p-cumylphenol, and tribromophenol, are exemplified by long chain alkylphenols, aliphatic carboxylic acid chlorides, aliphatic carboxylic acids, hydroxybenzoic acid alkyl esters, hydroxyphenyl alkyl acid esters, and alkyl ether phenols. The use amount thereof, relative to 100 mol of the entirety of dihydric phenol-based compounds used, is in the range of 100 to 0.5 mol, and preferably 50 to 2 mol. Two or more compounds can naturally be used in combination.

To accelerate the polycondensation reaction, a catalyst such as a tertiary amine, such as triethylamine, or a quaternary ammonium salt may be added.

The reaction time of such a polymerization reaction is preferably 30 min or more, and more preferably 50 min or more. A small amount of an antioxidant such as sodium sulfite or hydrosulfide may be added as desired.

Branching agents can be used in combination with the above dihydric phenol-based compounds to form branched polycarbonate-polydiorganosiloxanes. Examples of trifunctional or higher polyfunctional aromatic compounds used in such branched polycarbonate-polydiorganosiloxane copolymer resins include phloroglucine, phloroglucide, trisphenols such as 4,6-dimethyl-2,4,6-tris(4-hydroxydiphenyl)heptene-2, 2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane, 2,6-bis(2-hydroxy-5-methylbenzyl)-4-methylphenol, and 4-{4-[1,1-bis(4-hydroxyphenyl)ethyl]benzene}-α,α-dimethylbenzylphenol; tetra(4-hydroxyphenyl)methane, bis(2,4-dihydroxyphenyl)ketone, 1,4-bis(4,4-dihydroxytriphenylmethyl)benzene; trimellitic acid, pyromellitic acid, benzophenonetetracarboxylic acid, and acid chlorides thereof. Among these, 1,1,1-tris(4-hydroxyphenyl)ethane and 1,1,1-tris(3,5-dimethyl-4-hydroxyphenyl)ethane are preferable, and 1,1,1-tris(4-hydroxyphenyl)ethane is particularly preferable. The ratio of the polyfunctional compound in the branched polycarbonate-polydiorganosiloxane copolymer resin is preferably 0.001 to 1 mol%, more preferably 0.005 to 0.9 mol%, even more preferably 0.01 to 0.8 mol%, and particularly preferably 0.05 to 0.4 mol% in the entire amount of the polycarbonate-polydiorganosiloxane copolymer resin. The amount of such branched structures can be calculated from $^1$H-NMR measurements.

The reaction pressure can be any of reduced pressure, normal pressure, or elevated pressure, but generally, the reaction can be carried out preferably under normal pressure or the reaction system's own pressure. The reaction temperature is selected from a range of -20 to 50°C, and since heat is generated during polymerization in many cases, water cooling or ice cooling is desirable. The reaction time varies due to other conditions such as reaction temperature and cannot be generally defined, but the reaction is generally carried out for 0.5 to 10 h.

In some cases, the obtained polycarbonate-polydiorganosiloxane copolymer resin can be appropriately subjected to a physical treatment (such as mixing or fractionation) and/or a chemical treatment (such as a polymer reaction, a crosslinking treatment, or a partial decomposition treatment) to obtain a polycarbonate-polydiorganosiloxane copolymer resin having a desired reduced viscosity [ηSP/c].

The resulting reaction product (crude product) can be subjected to various post-treatments such as known separation and purification methods to recover a polycarbonate-polydiorganosiloxane copolymer resin having a desired

purity (degree of purification).

The average size of the polydiorganosiloxane domains in a polycarbonate-polydiorganosiloxane copolymer resin molded article is preferably in the range of 1 to 40 nm. Such an average size is more preferably 1 to 30 nm, and even more preferably 5 to 25 nm. Below the lower limit of such a preferred range, impact resistance and flame retardancy are not sufficiently exhibited. Above the upper limit of such a preferred range, impact resistance may not be stably exhibited.

The average domain size and normalized dispersion of the polydiorganosiloxane domains in a polycarbonate-polydiorganosiloxane copolymer resin molded product of the present invention are evaluated by small-angle X-ray scattering (SAXS) method. The small-angle X-ray scattering method is a method for measuring diffuse scattering and diffraction occurring in small-angle regions of scattering angle ($2\theta$) < 10°. In the small-angle X-ray scattering method, if there are regions with different electron densities of about 1 to 100 nm in a substance, the diffuse scattering of X-rays is measured due to the difference in electron density. The particle size of the measurement object is determined based on this scattering angle and scattering intensity. In the case of a polycarbonate-polydiorganosiloxane copolymer resin that has an aggregate structure wherein polydiorganosiloxane domains are dispersed in a polycarbonate polymer matrix, diffuse scattering of X-rays occurs due to the difference in electron density between the polycarbonate matrix and the polydiorganosiloxane domains. The scattering intensity I at each scattering angle ($2\theta$) in the range of scattering angles ($2\theta$) of less than 10° is measured to measure the small-angle X-ray scattering profile. Assuming that the polydiorganosiloxane domains are spherical domains and variations are present in particle size distribution, a simulation is carried out using commercially available analysis software from an assumed particle size and an assumed particle size distribution model to determine the average size and particle size distribution (normalized dispersion) of the polydiorganosiloxane domains. Average size and particle size distribution of polydiorganosiloxane domains dispersed in a polycarbonate polymer matrix, which cannot be accurately measured by observation with a transmission electron microscope, can be measured precisely, easily, and reproducibly according to the small-angle X-ray scattering method. The average domain size means a numerical average of the individual domain sizes. The normalized dispersion means a parameter obtained by normalizing the spread of particle size distribution by the average size, and specifically, is a value obtained by normalizing the dispersion of the polydiorganosiloxane domain sizes by the average domain size, expressed by formula (1) below.

$$\text{NORMALIZED DISPERSION } (\%) = \delta / D_{av} \quad \cdots \quad (1)$$

In the above formula (1), $\delta$ is a standard deviation of the polydiorganosiloxane domain size, and $D_{av}$ is the average domain size.

The terms "average domain size" and "normalized dispersion" used in association with the present invention refer to measurement values obtained by measuring a 1.0-mm thick portion of a three-tiered plate prepared by the method described in the Examples, by the small-angle X-ray scattering method. Analysis is carried out with an isolated particle model wherein interparticle interactions (interparticle interference) are not taken into consideration.

<Component A-2: ABS resin>

The ABS resin used as component A-2 in the present invention is a copolymer having acrylonitrile and styrene graft-polymerized to polybutadiene. As the styrene, styrene and $\alpha$-methylstyrene can be particularly preferably used. The ratio of the component to be grafted to polybutadiene is preferably 95 to 20% by weight, and particularly preferably 90 to 50% by weight in 100% by weight of the ABS resin component. Further, it is preferable that acrylonitrile be 5 to 50% by weight and styrene be 95 to 50% by weight relative to the total amount of acrylonitrile and styrene at 100% by weight. Regarding a portion of the components to be graft-polymerized to polybutadiene, methyl (meth)acrylate, ethyl acrylate, maleic anhydride, or N-substituted maleimide can be mixed for use, and the content ratio thereof in the ABS resin components is preferably 15% by weight or less. As the initiator, chain transfer agent, and emulsifier used in the reaction, various conventionally known ones may be used as needed. In the ABS resin of the present invention, the particle size of the polybutadiene is preferably 0.1 to 5.0 $\mu$m, more preferably 0.2 to 3.0 $\mu$m, and particularly preferably 0.3 to 1.5 $\mu$m. The particle size distribution of such a polybutadiene may be a single distribution or a distribution having two or more peaks. In terms of the morphology thereof, the particles may form a single phase, or may have a salami structure by containing an occluding phase around the particles. Conventionally, it is well known that ABS resins contain a copolymer consisting of acrylonitrile and styrene not grafted to a diene rubber component, and the ABS resin of the present invention may also contain a free polymer component generated during such polymerization. For the reduced viscosity of such a copolymer consisting of free acrylonitrile and styrene, the reduced viscosity (30°C) is preferably 0.2 to 1.0 dl/g, and more preferably 0.3 to 0.7 dl/g. The ratio of grafted acrylonitrile and styrene relative to polybutadiene, in terms of graft ratio (% by weight), is preferably 20 to 200%, and more preferably 20 to 70%. Such ABS resin may be manufactured by any method of bulk

polymerization, suspension polymerization, and emulsion polymerization, and particularly by bulk polymerization. In the case of bulk polymerization, since alkali metal salts from emulsifiers are not substantially contained, thermal stability of the resin composition can be more satisfactorily maintained. The copolymerization method may be single-stage copolymerization or multistage copolymerization. A blend of the ABS resin obtained by such a manufacturing method and a vinyl compound polymer obtained by separately copolymerizing acrylonitrile and styrene can also be preferably used.

<Component A-3: polyester resin>

The polyester resin used as component A-3 in the present invention is preferably a polyester resin in which, of the dicarboxylic acid component and the diol component forming the polyester, 70 mol% or greater of 100 mol% of the dicarboxylic acid component is an aromatic dicarboxylic acid, and is a polyester resin in which more preferably 90 mol% or greater, most preferably 99 mol% or greater, is an aromatic dicarboxylic acid.

Examples of the dicarboxylic acid include terephthalic acid, isophthalic acid, 2-chloroterephthalic acid, 2,5-dichloroterephthalic acid, 2-methylterephthalic acid, 4,4-stilbenedicarboxylic acid, 4,4-biphenyldicarboxylic acid, orthophthalic acid, 2,6-naphthalenedicarboxylic acid, 2,7-naphthalenedicarboxylic acid, bisbenzoic acid, bis(p-carboxyphenyl)methane, anthracenedicarboxylic acid, 4,4-diphenyl ether dicarboxylic acid, 4,4-diphenoxyethane dicarboxylic acid, 5-Na sulfoisophthalate, and ethylene-bis-p-benzoate. These dicarboxylic acids can be used independently, or can be used by mixing two or more thereof. In the polyester resin in the present invention, in addition to the above aromatic dicarboxylic acid, less than 30 mol% of an aliphatic dicarboxylic acid component can be copolymerized. Specific examples thereof include adipic acid, sebacic acid, azelaic acid, dodecanedioic acid, 1,3-cyclohexanedicarboxylic acid, and 1,4-cyclohexanedicarboxylic acid.

Examples of the diol component in the present invention can include ethylene glycol, diethylene glycol, 1,2-propylene glycol, 1,3-propanediol, 2,2-dimethyl-1,3-propanediol, trans- or cis-2,2,4,4,-tetramethyl-1,3-cyclobutanediol, 1,4-butanediol, neopentyl glycol, 1,5-pentanediol, 1,6-hexanediol, 1,4-cyclohexanedimethanol, 1,3-cyclohexanedimethanol, decamethylene glycol, cyclohexanediol, p-xylenediol, bisphenol A, tetrabromobisphenol A, and tetrabromobisphenol A-bis(2-hydroxyethyl ether). These can be used independently or by mixing two or more thereof. The dihydric phenol in the diol component is preferably 30 mol% or less.

Specific examples of the polyester resin include polyethylene terephthalate (PET), polypropylene terephthalate, polybutylene terephthalate (PBT), polyhexylene terephthalate, polyethylene naphthalate (PEN), polybutylene naphthalate (PBN), polyethylene-1,2-bis(phenoxy)ethane-4,4'-dicarboxylate, and copolymer polyester resins such as polyethylene isophthalate/terephthalate copolymers and polybutylene terephthalate/isophthalate copolymers.

The terminal group structure of the polyester resin used in the present invention is not particularly limited, and the ratios of hydroxyl groups and carboxyl groups in the terminal groups may be approximately equal, or one of the ratios may be greater. These terminal groups may be blocked by reacting with a compound having reactivity with the terminal groups.

The manufacturing method of polyester resin used in the present invention is carried out, according to a conventional method, by polymerizing the dicarboxylic acid component and the diol component while heating in the presence of a polycondensation catalyst containing, for example, titanium, germanium, or antimony, and discharging the by-product water or lower alcohol from the system. For example, a germanium-based polymerization catalyst can be exemplified by an oxide, a hydroxide, a halide, an alcoholate, or a phenolate of germanium, and more specifically, can be exemplified by germanium oxide, germanium hydroxide, germanium tetrachloride, and tetramethoxygermanium. In the present invention, compounds of manganese, zinc, calcium, and magnesium, which are used in a transesterification reaction in an early stage of conventionally known polycondensation, can be used in combination. After the transesterification reaction is completed, such catalysts can be inactivated with a phosphoric acid or phosphorous acid compound to carry out polycondensation. The manufacturing method of the polyester resin can be either a batch method or a continuous polymerization method.

Among the above polyester resins, polyethylene terephthalate is particularly preferred. Polyethylene terephthalate in the present invention is a polymer obtained by polycondensation reaction of terephthalic acid or a derivative thereof with 1,4-ethanediol or a derivative thereof, and includes copolymers of other dicarboxylic acid components and other alkylene glycol components as described above.

The terminal structure of the polyethylene terephthalate is not particularly limited, as described above. More preferably, the number of terminal carboxyl groups is less than the number of terminal hydroxyl groups. The above various methods can be taken as the manufacturing method, but continuous polymerization is preferable. The reason therefor is that high quality stability and cost is advantageous. As the polymerization catalyst, using an organic titanium compound is preferable. The reason therefor is that there tends to be less effect on ester exchange reactions. As the organic titanium compound, preferable specific examples can include titanium tetrabutoxide, titanium isopropoxide, titanium oxalate, titanium acetate, titanium benzoate, titanium trimellitate, and reaction product of tetrabutyl titanate and trimellitic anhydride. Preferably, the use amount of the organic titanium compound is such that the titanium atoms account for 3 to 12 mg atom% relative to the acid component constituting the polyethylene terephthalate.

The molecular weight of the polyester resin in the present invention is not particularly limited. The intrinsic viscosity measured at 35°C with o-chlorophenol as a solvent is preferably 0.5 to 1.5, and more preferably 0.6 to 1.2.

<Component A-4: AS resin>

The AS resin used as component A-4 in the present invention is a copolymer of acrylonitrile and styrene. The AS resin may be a resin having high stereoregularity, such as syndiotactic polystyrene, due to the use of a catalyst such as a metallocene catalyst during manufacture. In some cases, polymers and copolymers having a narrow molecular weight distribution, block copolymers, and polymers and copolymers having high stereoregularity, obtained by methods such as anionic living polymerization and radical living polymerization, can be used.

<Component A-5: PS resin>

The PS resin used as component A-5 in the present invention is a polymer of styrene.

<Component A-6: AAS resin>

The AAS resin used as component A-6 in the present invention is a copolymer consisting of acrylonitrile, styrene, and an acrylic rubber component.

<Component B: acidic phosphate ester>

For the acidic phosphate ester used in the present invention, a phosphate monoester, a phosphate diester, a phosphate triester, or a mixture thereof can be used, but a mixture of a monoester and a diester is preferable. Various combinations of esters having 1 to 22 carbon atoms can be used, but stearyl acid phosphate is the most preferable. The acid value of the acidic phosphate ester is 10 to 200 mgKOH/g, and is preferably 120 to 180 mgKOH/g and more preferably 150 to 170 mgKOH/g. If the acid value is less than 10 mgKOH/g, the acidic phosphate ester is not practical for manufacturing, and if the acid value is more than 200 mgKOH/g, discoloration and degradation of strength during molding cannot be prevented. For the measurement of acid value, an alcohol solution of the acidic phosphate ester is titrated with a KOH alcohol solution using a potentiometric titrator.

The content of the component B, relative to 100 parts by weight of the component A, is 0.001 to 1 part by weight, and is preferably 0.01 to 0.1 parts by weight and more preferably 0.01 to 0.07 parts by weight. In the case where the content of the component B is less than 0.001 parts by weight or greater than 1 part by weight, discoloration and degradation of strength during molding cannot be prevented.

<Other components>

The thermoplastic resin component of the present invention can be blended with an inorganic filler (component C), a flame retardant (component D), an anti-drip agent (component E), and other additives indicated below, in ranges that do not impair the object of the present invention.

<Component C: inorganic filler>

For the inorganic filler of component C, any conventionally known inorganic filler can be used. However, it is preferable that at least one inorganic filler be selected from the group consisting of (C-1) glass fiber (component C-1), (C-2) tabular glass filler (component C-2), (C-3) fibrous carbon filler (component C-3), (C-4) non-fibrous carbon filler (component C-4), and (C-5) silicate mineral (component C-5).

The content of the component C, relative to 100 parts by weight of the component A, is preferably 1 to 150 parts by weight, more preferably 3 to 140 parts by weight, and even more preferably 5 to 130 parts by weight. In the case where the content of the component C is less than 1 part by weight, sufficient rigidity may not be obtained, and in the case of greater than 150 parts by weight, strength during molding and flame retardancy may be degraded.

<Component C-1: glass fiber>

The glass fiber used in the present invention is not particularly limited to glass compositions such as A-glass, C-glass, and E-glass, and in some cases, may contain components such as $TiO_2$, $SO_3$, and $P_2O_5$. However, E-glass (alkali-free glass) is more preferable when blended with a thermoplastic resin. Two or more of these glass fibers can be used in combination. The glass fiber is obtained by quenching molten glass while stretching by various methods, and forming into a

predetermined fiber shape or milled shape. The quenching and stretching conditions in such cases are not particularly limited. For the shape of the cross-section, in addition to being perfectly circular, shapes other than a perfect circle such as an ellipse, a cocoon, and a trefoil may be used. A mixture of perfectly circular glass fibers and glass fibers of shapes other than a perfect circle may be used. Among these, perfectly circular glass fibers are more preferable.

It is preferable that these glass fibers be pretreated with a coupling agent such as an isocyanate-based compound, an organic silane-based compound, an organic titanate-based compound, an organic borane-based compound, or an epoxy compound, or in the case of a swellable layered silicate, organic onium ions, in order to be able to obtain more excellent mechanical strength. The glass fiber used in the present invention preferably has, in the range of, a diameter (D) of 6 to 13 μm, a cut length (L) of 30 μm to 9 mm, and an L/D of 2.3 to 1500.

<C-2: tabular glass filler>

Examples of the tabular glass filler include glass flakes, metal-coated glass flakes, and metal oxide-coated glass flakes.

The glass flakes that are substrates of tabular glass filler are tabular glass fillers manufactured by methods such as cylinder blow method and sol-gel method. The size of the raw material of the glass flakes can be selected from various sizes depending on the degree of pulverization and classification. The average particle size of the glass flakes used for the raw material is preferably 10 to 1000 μm, more preferably 20 to 500 μm, and even more preferably 30 to 300 μm. Accordingly, the above range is excellent for both handleability and moldability. Generally, the tabular glass filler cracks when melted and kneaded with a resin, and the average particle size is decreased. The number average particle size of the tabular glass filler in the thermoplastic resin composition is preferably 10 to 200 μm, more preferably 15 to 100 μm, and even more preferably 20 to 80 μm. The number average particle size is a value calculated by an image analyzer from an image acquired by observing under an optical microscope a residue of the tabular glass filler collected in a process such as high-temperature incineration, solvent dissolution, or chemical decomposition of the molded article. In addition, calculation of the value is based on a method in which flakes having less than a flake thickness used as a standard are not counted. The thickness is preferably 0.5 to 10 μm, more preferably 1 to 8 μm, and even more preferably 1.5 to 6 μm. A tabular glass filler having the above number average particle size and thickness may achieve satisfactory mechanical strength, appearance, and moldability.

The glass composition of the tabular glass filler is not particularly limited, and various glass compositions typified by A-glass, C-glass, and E-glass are applied. Such a glass filler may contain components such as $TiO_2$, $SO_3$, and $P_2O_5$ as needed. Among these, E-glass (alkali-free glass) is more preferable. From the viewpoint of improving mechanical strength, the tabular glass filler is preferably subjected to a surface treatment with a known surface treatment agent, such as a silane coupling agent, a titanate coupling agent, or an aluminate coupling agent. A tabular glass filler that has undergone a sizing treatment with an olefin resin, a styrene resin, an acrylic resin, a polyester resin, an epoxy resin, or a urethane resin is preferably used. The amount of sizing agent adhered to the sizing-treated tabular glass filler is preferably 0.5 to 8% by weight, and more preferably 1 to 4% by weight in 100% by weight of the tabular glass filler.

The tabular glass filler includes those surface-coated with a dissimilar material. Preferred examples of such a dissimilar material include metals and metal oxides. Examples of metals include silver, copper, nickel, and aluminum. Examples of metal oxides include titanium oxide, cerium oxide, zirconium oxide, iron oxide, aluminum oxide, and silicon oxide. The method of surface-coating with such a dissimilar material is not particularly limited, and examples include various known plating methods (for example, electrolytic plating, electroless plating, and hot-dip plating), vacuum deposition, ion plating, CVD methods (for example, thermal CVD, MOCVD, and plasma CVD), PVD methods, and sputtering methods.

<Component C-3: fibrous carbon filler>

Examples of the fibrous carbon filler include carbon fiber, metal-coated carbon fiber, carbon milled fiber, vapor-grown carbon fiber, and carbon nanotube. A carbon nanotube may have a fiber diameter of 0.003 to 0.1 μm, and may be single-walled, double-walled, or multi-walled, preferably multi-walled (so-called MWCNT). Among these, carbon fiber and metal-coated carbon fiber are preferable in terms of excellent mechanical strength and the ability to impart satisfactory electrical conductivity. Satisfactory electrical conductivity has become one of the important characteristics required of resin materials in digital precision instruments (typified by, for example, digital still cameras) in recent years.

As the carbon fiber, any of cellulose-based, polyacrylonitrile-based, and pitched-based carbon fibers can be used. Carbon fibers obtained by a method of spinning without undergoing an infusibilization step, typified by methods of spinning or molding a raw material composition composed of a polymer of aromatic sulfonic acids or salts thereof with methylene bonds and a solvent, followed by carbonization, can be used. Any of general-purpose type, intermediate-modulus type, and high-modulus type can be used. Among these, polyacrylonitrile-based high-modulus type is particularly preferable. The average fiber diameter of the carbon fibers is not particularly limited, but is generally 3 to 15 μm, and

preferably 5 to 13 μm. Carbon fibers having an average fiber average diameter in such a range may be able to exhibit satisfactory mechanical strength and fatigue properties without impairing the appearance of the molded article. The preferable fiber length of the carbon fiber, as the number average fiber length in the thermoplastic resin composition, is 60 to 500 μm, preferably 80 to 400 μm, and particularly preferably 100 to 300 μm. The number average fiber length is a value calculated by an image analyzer from a residue of the carbon fibers collected in a process such as high-temperature incineration, solvent dissolution, or chemical decomposition of the molded article, observed under an optical microscope. In addition, calculation of the value is based on a method in which lengths less than the fiber length are not counted. The aspect ratio of the carbon fiber is preferably in the range of 10 to 200, more preferably in the range of 15 to 100, and even more preferably in the range of 20 to 50. The aspect ratio refers to a value obtained by dividing the average fiber length by the average fiber diameter.

It is preferable that the surface of the carbon fiber be oxidized to enhance adhesion to the matrix resin and improve mechanical strength. The oxidation treatment method is not particularly limited. Preferable examples include (1) a method of treating a fibrous carbon filler with an acid or alkali, a salt thereof, or an oxidizing gas; (2) a method of baking a fiber that can be made into a fibrous carbon filler or a fibrous carbon filler at a temperature of 700°C or higher in the presence of an inert gas comprising an oxygen-containing compound; and (3) a method of oxidizing a fibrous carbon filler, followed by a heat treatment in the presence of an inert gas.

A metal-coated carbon fiber is a carbon fiber having a surface coated with a metal layer. Examples of the metal include silver, copper, nickel, and aluminum, preferably nickel from the viewpoint of corrosion resistance of the metal layer. As a method of metal coating, various methods described above for surface coating of the tabular glass filler with a dissimilar material can be used. Among those, plating is preferably used. In the case of such a metal-coated carbon fiber, any of the carbon fibers listed above can be used as the base carbon fiber. The thickness of the metal coating layer is preferably 0.1 to 1 μm, more preferably 0.15 to 0.5 μm, and even more preferably 0.2 to 0.35 μm.

Such carbon fibers or metal-coated carbon fibers are preferably subjected to a sizing treatment with an olefin-based resin, a styrene-based resin, an acrylic resin, a polyester-based resin, an epoxy-based resin, or a urethane-based resin. A fibrous carbon filler treated with a urethane-based resin or an epoxy-based resin is particularly preferred in the present invention from the viewpoint of excellent mechanical strength.

<Component C-4: non-fibrous carbon filler>

Examples of the non-fibrous carbon filler include carbon black, graphite, and fullerene. Among these, carbon black and graphite are preferable from the viewpoint of mechanical strength, wet heat resistance, and thermal stability. As carbon black, carbon black having a DBP oil absorption of 100 ml/100 g to 500 ml/100 g is preferable from the viewpoint of electrical conductivity. The carbon black is generally acetylene black or Ketjen black. Specific examples include Denka Black from Denka Company Limited, Vulcan XC-72 and BP-2000 manufactured by Cabot Corporation, and Ketjenblack EC and Ketjenblack EC-600JD manufactured by Lion Corporation.

As the graphite, any of natural graphite, called graphite by mineral name, and various artificial graphite can be used. As natural graphite, any of earthy graphite, vein graphite (also called lump graphite), and flake graphite can be used. Artificial graphite is obtained by heat-treating amorphous carbon to artificially orient microscopic graphite crystals in an irregular arrangement, and includes, in addition to artificial graphite used in general carbon materials, kish graphite, decomposed graphite, and pyrolytic graphite. The artificial graphite used in general carbon materials is generally manufactured by a graphitization treatment of petroleum coke or coal-based pitch coke as the main raw material.

The graphite of the present invention may include expanded graphite that is made thermally expandable by a treatment such as an acid treatment, or graphite that has already been expanded. The particle size of the graphite is preferably in the range of 2 to 300 μm. The particle size is more preferably 5 to 200 μm, even more preferably 7 to 100 μm, and particularly preferably 7 to 50 μm. By satisfying such a range, satisfactory mechanical strength and molded article appearance may be achieved. When the average particle size is less than 2 μm, the effect of improving rigidity may be small. When the average particle size is greater than 300 μm, impact resistance is significantly lowered, and so-called graphite floatation may be noticeable on the surface of the molded product, which is not preferable.

The fixed carbon content of graphite in the present invention is preferably 80% by weight or greater, more preferably 90% by weight or greater, and even more preferably 98% by weight or greater. The volatile content of graphite in the present invention is preferably 3% by weight or less, more preferably 1.5% by weight or less, and even more preferably 1% by weight or less.

The average particle size of graphite in the present invention refers to particle size of the graphite itself prior to formation of the resin composition. In addition, the particle size refers to one determined by a laser diffraction/scattering method.

The surface of the graphite may be subjected to a surface treatment, for example, an epoxy treatment, a urethane treatment, a silane coupling treatment, or an oxidation treatment to increase affinity with the thermoplastic resin, as long as the characteristics of the composition of the present invention are not impaired.

<Component C-5: silicate mineral>

The inorganic filler in the present invention includes silicate minerals composed of at least a metal oxide component and a SiO2 component. Orthosilicate, disilicate, cyclic silicate, and chain silicate are preferred. The silicate minerals are in a crystalline state, the crystals may be in any form that each silicate mineral can have, and the crystals can have various shapes such as fibrous or tabular shape.

The silicate mineral may be a compound of any of a composite oxide, an oxyacid salt (consisting of an ion lattice), and a solid solution. The composite oxide may be any of a combination of two or more single oxides and a combination of two or more single oxides and oxyacid salts. The solid solution may be any of a solid solution of two or more metal oxides and a solid solution of two or more oxyacid salts. The silicate mineral may also be a hydrate. The form of the water of crystallization in the hydrate may be any of Si-OH hydrogen silicate ions, hydroxide ions ($OH^-$) ionically inserted into metal cations, and $H_2O$ molecules inserted into gaps of the structure.

As the silicate mineral, an artificially synthesized product corresponding to a natural product can be used. As the artificially synthesized product, silicate minerals obtained from various conventionally known methods, such as various synthesis methods using, for example, solid reaction, hydrothermal reaction, and ultrahigh-pressure reaction, can be used.

Specific examples of the silicate mineral in each metal oxide component include the following. The notation in parentheses herein is the name of the mineral that is mainly composed of the silicate mineral, and means that the compound in parentheses can be used as an exemplified metal salt.

Examples of silicate minerals comprising $K_2O$ as a component thereof include $K_2O \cdot SiO2$, $K_2O \cdot 4SiO2 \cdot H_2O$, $K_2O \cdot Al_2O_3 \cdot 2SiO_2$ (kalsilite), $K_2O \cdot Al_2O_3 \cdot 4SiO_2$ (leucite), and $K_2O \cdot Al_2O_3 \cdot 6SiO_2$ (orthoclase).

Examples of silicate minerals comprising $Na_2O$ as a component thereof include $Na_2O \cdot SiO_2$ and hydrates thereof, $Na_2O \cdot 2SiO_2$, $2Na_2O \cdot SiO_2$, $Na_2O \cdot 4SiO_2$, $Na_2O \cdot 3SiO_2 \cdot 3H_2O$, $Na_2O \cdot Al_2O_3 \cdot 2SiO_2$, $Na_2O \cdot Al_2O_3 \cdot 4SiO_2$ (jadeite), $2Na_2O \cdot 3CaO \cdot 5SiO_2$, $3Na_2O \cdot 2CaO \cdot 5SiO_2$, and $Na_2O \cdot Al_2O_3 \cdot 6SiO_2$ (albite).

Examples of silicate minerals comprising $Li_2O$ as a component thereof include $Li_2O \cdot SiO_2$, $2Li_2O \cdot SiO_2$, $Li_2O \cdot SiO2 \cdot H_2O$, $3Li_2O \cdot 2SiO_2$, $Li_2O \cdot Al_2O3 \cdot 4SiO_2$ (petalite), $Li_2O \cdot Al_2O_3 \cdot 2SiO_2$ (eucryptite), and $Li_2O \cdot Al_2O_3 \cdot 4SiO_2$ (spodumene).

Examples of silicate minerals comprising BaO as a component thereof include $BaO \cdot SiO_2$, $2BaO \cdot SiO_2$, $BaO \cdot Al_2O_3 \cdot 2SiO_2$ (celsian), and $BaO \cdot TiO_2.3SiO_2$ (bentonite).

Examples of silicate minerals comprising CaO as a component thereof include $3CaO \cdot SiO_2$ (alite, a cement clinker mineral), $2CaO \cdot SiO_2$ (belite, a cement clinker mineral), $2CaO \cdot MgO \cdot 2SiO_2$ (akermanite), $2CaO \cdot Al_2O_3 \cdot SiO_2$ (gehlenite), solid solution of akermanite and gehlenite (melilite), $CaO \cdot SiO_2$ (wollastonite (including both α-type and β-type)), $CaO \cdot MgO \cdot 2SiO_2$ (diopside), $CaO \cdot MgO \cdot SiO_2$ (monticellite), $3CaO \cdot MgO \cdot 2SiO_2$ (merwinite), $CaO \cdot Al_2O_3 \cdot 2SiO_2$ (anorthite), tobermorite group hydrates such as $5CaO \cdot 6SiO_2 \cdot 5H_2O$ (tobermorite, and others such as $5CaO \cdot 6SiO_2 \cdot 9H_2O$), wollastonite group hydrates such as $2CaO \cdot SiO_2 \cdot H_2O$ (hillebrandite), xonotlite group hydrates such as $6CaO \cdot 6SiO_2 \cdot H_2O$ (xonotlite), gyrolite group hydrates such as $2CaO \cdot SiO_2 \cdot 2H_2O$ (gyrolite), $CaO \cdot Al_2O_3 \cdot 2SiO_2 \cdot H_2O$ (lawsonite), $CaO \cdot FeO \cdot 2SiO_2$ (hedenbergite), $3CaO \cdot 2SiO$ (kilchoanite), $3CaO \cdot Al_2O_3 \cdot 3SiO_2$ (grossular), $3CaO \cdot Fe_2O_3 \cdot 3SiO_2$ (andradite), $6CaO \cdot 4Al_2O_3 \cdot FeO \cdot SiO_2$ (pleochroaite), clinozoisite, piemontite, allenite, vesuvianite, axinite, scawtite, and augite.

Examples of silicate minerals comprising CaO as a component thereof further include Portland cement. The type of Portland cement is not particularly limited, and any of ordinary, early-strength, ultrahigh-early-strength, moderate-heat, sulfate-resistant, and white can be used. Various mixed cements, for example, blast furnace cement, silica cement, and fly ash cement can be used as the component C. Other silicate minerals comprising CaO as a component thereof can include blast furnace slag and ferrite.

Examples of silicate minerals comprising ZnO as a component thereof include $ZnO \cdot SiO_2$, $2ZnO \cdot SiO_2$ (troostite), and $4ZnO \cdot 2SiO2 \cdot H_2O$ (hemimorphite). Examples of those comprising MnO as a component thereof include $MnO \cdot SiO_2$, $2MnO \cdot SiO_2$, $CaO \cdot 4MnO \cdot 5SiO_2$ (rhodonite), and kozulite. Examples of those comprising FeO as a component thereof include $FeO \cdot SiO_2$ (ferrosilite), $2FeO \cdot SiO_2$ (fayalite), $3FeO \cdot Al_2O_3 \cdot 3SiO_2$ (almandine), and $2CaO \cdot 5FeO \cdot 8SiO_2 \cdot H_2O$ (ferroactinolite).

Examples of silicate minerals comprising CoO as a component thereof include $CoO \cdot SiO_2$ and $2CoO \cdot SiO_2$.

Examples of silicate minerals comprising MgO as a component thereof include $MgO \cdot SiO_2$ (steatite, enstatite), $2MgO \cdot SiO_2$ (forsterite), $3MgO \cdot Al_2O_3 \cdot 3SiO_2$ (pyrope), $2MgO \cdot 2Al_2O_3 \cdot 5SiO_2$ (cordierite), $2MgO \cdot 3SiO_2 \cdot 5H_2O$, $3MgO \cdot 4SiO_2 \cdot H_2O$ (talc), $5MgO \cdot 8SiO_2 \cdot 9H_2O$ (attapulgite), $4MgO \cdot 6SiO_2 \cdot 7H_2O$ (sepiolite), $3MgO \cdot 2SiO_2 \cdot 2H_2O$ (chrysolite), $5MgO \cdot 2CaO \cdot 8SiO_2 \cdot H_2O$ (tremolite), $5MgO \cdot Al_2O_3 \cdot 3SiO_2 \cdot 4H_2O$ (chlorite), $K_2O \cdot 6MgO \cdot Al_2O_3 \cdot 6SiO_2 \cdot 2H_2O$ (phlogopite), $Na_2O \cdot 3MgO \cdot 3Al_2O_3 \cdot 8SiO_2 \cdot H_2O$ (glaucophane), magnesium tourmaline, anthophyllite, cummingtonite, vermiculite, and smectite.

Examples of silicate minerals comprising $Fe_2O_3$ as a component thereof include $Fe_2O3 \cdot SiO_2$.

Examples of those comprising $ZrO_2$ as a component thereof include $ZrO_2 \cdot SiO_2$ (zircon) and AZS refractory.

Examples of silicate minerals comprising $Al_2O_3$ as a component thereof include $Al_2O_3 \cdot SiO_2$ (sillimanite,

andalusite, kyanite), $2Al_2O_3 \cdot SiO_2$, $Al_2O_3 \cdot 3SiO_2$, $3Al_2O_3 \cdot 2SiO_2$ (mullite), $Al_2O_3 \cdot 2SiO_2 \cdot 2H_2O$ (kaolinite), $Al_2O_3 \cdot 4SiO_2 \cdot H_2O$ (pyrophyllite), $Al_2O_3 \cdot 4SiO_2 \cdot H_2O$ (bentonite), $K_2O \cdot 3Na_2O \cdot 4Al_2O_3 \cdot 8SiO_2$ (nepheline), $K_2O \cdot 3Al_2O_3 \cdot 6SiO_2 \cdot 2H_2O$ (mascovite, sericite), $K_2O \cdot 6MgO \cdot Al_2O3 \cdot 6SiO2 \cdot 2H_2O$ (phlogopite), and various zeolites, synthetic fluorophlogopites, and biotites.

Among the above silicate minerals, talc, mica, and wollastonite are particularly preferred from the viewpoint of having an excellent balance of rigidity and impact resistance, having excellent wet heat resistance, thermal stability, and appearance, and being easily available.

<Component D: flame retardant>

For the flame retardant of component D, any of various compounds known as flame retardants for polycarbonate resins may be blended. Among these, at least one flame retardant selected from the group consisting of (D-1) halogenated carbonate compounds (component D-1), (D-2) phosphate compounds (component D-2), (D-3) phosphazene compounds (component D-3), (D-4) metal sulfonates (component D-4), and (D-5) silicone compounds (component D-5).

The content of the component D, relative to 100 parts by weight of the component A, is preferably 0.01 to 25 parts by weight, more preferably 0.015 to 22 parts by weight, and even more preferably 0.02 to 20 parts by weight. When the content of the component D is 0.01 to 25 parts by weight, achieving both a sufficient flame retardancy improvement effect and prevention of strength degradation during molding may be possible.

<Component D-1: halogenated carbonate compound>

As the halogenated carbonate compound used in the present invention, halogenated carbonate compounds wherein structural units represented by general formula (4) below are at least 60 mol% of all structural units and the specific viscosity is 0.015 to 0.1 are preferably used.

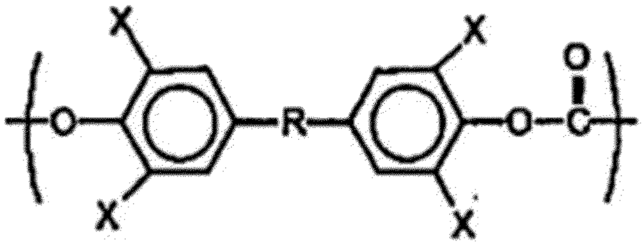

(4)

In general formula (4), X is a halogen atom, and R is an alkylene group having 1 to 4 carbon atoms, an alkylidene group having 1 to 4 carbon atoms, or $-SO_2-$.

In the formula (4), R preferably represents a methylene group, an ethylene group, an isopropylidene group, or $-SO_2-$, and particularly preferably an isopropylidene group. X is preferably a bromine atom.

It is preferable that the halogenated carbonate compound have a small amount of residual chloroformate group terminals, and the terminal chlorine amount be 0.3 ppm or less, more preferably 0.2 ppm or less. The terminal chlorine amount can be determined by dissolving a sample in methylene chloride, adding 4-(p-nitrobenzyl)pyridine to react with the terminal chlorine (terminal chloroformate), and measuring the product with an ultraviolet/visible spectrophotometer (U-3200 manufactured by Hitachi, Ltd.). When the terminal chlorine amount is 0.3 ppm or less, thermal stability of the polycarbonate resin composition is improved, molding at higher temperatures is possible, and as a result, a resin composition having more excellent moldability may be provided.

It is preferable that the halogenated carbonate compound have a small amount of residual hydroxyl group terminals. More specifically, the terminal hydroxyl group amount is preferably 0.0005 mol or less, and more preferably 0.0003 mol or less, relative to 1 mol of structural units of the halogenated carbonate compound. The terminal hydroxyl group amount can be determined by dissolving a sample in deuterated chloroform and measuring by $^1H$-NMR method. When there is such a terminal hydroxyl group amount, thermal stability of the polycarbonate resin composition may be further improved.

The specific viscosity of the halogenated carbonate compound is preferably in the range of 0.015 to 0.1, and more preferably in the range of 0.015 to 0.08. The specific viscosity of the halogenated carbonate compound is calculated according to the calculation formula used for calculating the viscosity average molecular weight of the polycarbonate resin as the component A-1 in the present invention described above.

The halogenated carbonate compound is commercially available, and examples include tetrabromobisphenol A carbonate oligomers (trade names FG-7000 and FG-8500) manufactured by Teijin Limited. These can be used in the present invention.

<Component D-2: phosphate ester-based compound>

The phosphate ester-based compound used in the present invention is a phosphate ester-based compound excluding the component B, and a phosphate compound, particularly an aryl phosphate compound, is preferred.

The phosphate compound preferably has a molecular weight of 300 or greater. When the molecular weight is less than 300, the difference between the boiling point of the phosphate compound and the combustion temperature of the resin composition is large. Volatilization of the phosphate compound during combustion may increase, and thus the effect as a flame retardant may be decreased.

For such a phosphate compound, various phosphate compounds conventionally known as flame retardants can be used. More preferably, one or more phosphate compounds represented by the general formula (5) below can be included.

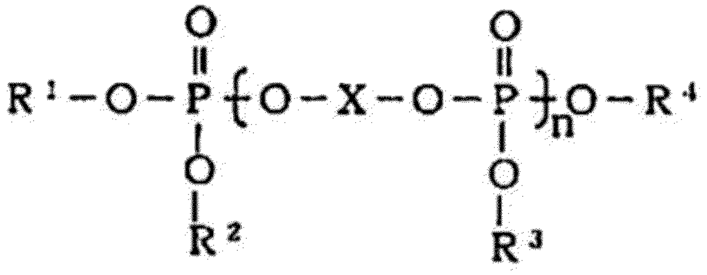 (5)

In general formula (5), X is a dihydric phenol residue derived from a dihydroxy compound selected from the group consisting of hydroquinone, resorcinol, bis(4-hydroxydipenyl)methane, bisphenol A, dihydroxydiphenyl, dihydroxynaphthalene, bis(4-hydroxyphenyl)sulfone, bis(4-hydroxyphenyl)ketone, and bis(4-hydroxyphenyl)sulfide; n is an integer of 0 to 5 or, in the case of a mixture of phosphate esters having different n numbers, an average value thereof; $R^1$, $R^2$, $R^3$, and $R^4$ are each independently a monohydric phenol residue derived from an aryl group selected from the group consisting of phenol, cresol, xylenol, isopropylphenol, butylphenol, and p-cumylphenol.

Phosphate compounds of the above general formula may be mixtures of compounds having different n numbers. In the case of such a mixture, the average n number is in the range of preferably 0.5 to 1.5, more preferably 0.8 to 1.2, even more preferably 0.95 to 1.15, and particularly preferably 1 to 1.14.

Preferred specific examples of the dihydric phenol from which X in the above general formula (5) is derived include resorcinol, bisphenol A, and dihydroxydiphenyl. Among these, resorcinol and bisphenol A are preferable.

Preferred specific examples of the monohydric phenol from which $R^1$, $R^2$, $R^3$ and $R^4$ in the above general formula (5) are derived include phenol, cresol, xylenol, and 2,6-dimethylphenol. Among these, phenol and 2,6-dimethylphenol are preferable.

As specific examples of phosphate compounds represented by the above general formula (5), monophosphate compounds such as triphenyl phosphate and tri(2,6-xylyl)phosphate; phosphate oligomers mainly composed of resorcinol bis(di(2,6-xylyl)phosphate), phosphate oligomers mainly composed of 4,4-dihydroxydiphneyl bis(diphenyl phosphate), and phosphate ester oligomers mainly composed of bisphenol A bis(diphenyl phosphate) are preferred. Among these, phosphate oligomers mainly composed of resorcinol bis(di(2,6-xylyl)phosphate), phosphate oligomers mainly composed of 4,4-dihydroxydiphneyl bis(diphenyl phosphate), and phosphate ester oligomers mainly composed of bisphenol A bis(diphenyl phosphate) are preferable.

<Component D-3: phosphazene compound>

The phosphazene compound used in the present invention needs only to be a compound comprising no halogen atom and having a phosphazene structure in the molecule, and is not particularly limited. The phosphazene structure herein represents a structure represented by formula: $-P(R^2)=N-$ [wherein $R^2$ is an organic group]. The phosphazene is represented by general formula (6) or (7).

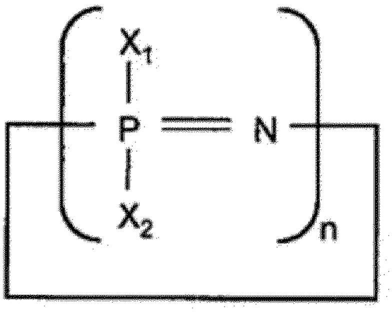

(6)

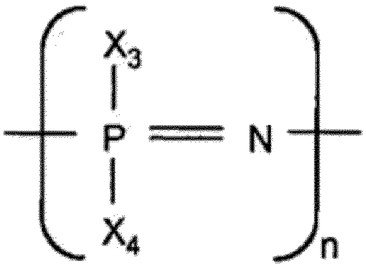

(7)

In general formulas (6) and (7), $X_1$, $X_2$, $X_3$, and $X_4$ represent hydrogen, hydroxyl group, amino group, or an organic group comprising no halogen atom. In addition, n represents an integer of 3 to 10.

In the above general formulas (6) and (7), examples of organic groups comprising no halogen atom that are represented by $X_1$, $X_2$, $X_3$, and $X_4$ include alkoxy groups, phenyl groups, amino groups, and allyl groups. Among these, cyclic phenoxyphosphazenes represented by general formula (8) below are preferable.

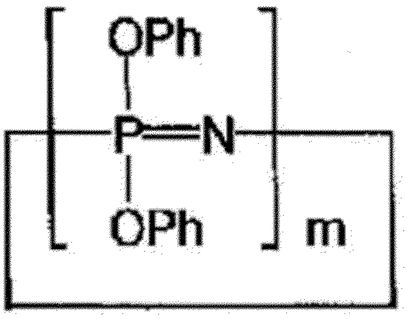

(8)

In general formula (8), m indicates an integer of 3 to 25. Ph indicates a phenyl group.

Examples of commercial products of the phosphazene compound include SPS-100, SPR-100, SA-100, SPB-100, SPB-100L (the foregoing manufactured by Otsuka Chemical Co., Ltd.), FP-100, FP-110 (the foregoing manufactured by Fushimi Pharmaceutical Co., Ltd.).

<Component D-4: metal sulfonate>

The metal used in the metal sulfonate used in the present invention is preferably an alkali metal or an alkaline earth metal, and more preferably an alkali metal. Examples of the alkali metal include lithium, sodium, potassium, rubidium, and cesium. Examples of the alkaline earth metal include beryllium, magnesium, calcium, strontium, and barium. Lithium, sodium, and potassium are particularly preferable.

The sulfonic acid used in the metal sulfonate used in the present invention is preferably an organic sulfonic acid, and more preferably an aliphatic sulfonic acid or an aromatic sulfonic acid.

The aliphatic sulfonic acid is preferably an alkyl sulfonic acid, more preferably a fluoroalkyl sulfonic acid in which a portion or all of the alkyl groups are substituted with fluorine atoms, and most preferably a perfluoroalkyl sulfonic acid in which all of the alkyl groups are substituted with fluorine atoms. Preferable examples of the perfluoroalkyl sulfonic acid include perfluoromethanesulfonic acid, perfluoroethanesulfonic acid, perfluoropropanesulfonic acid, perfluorobutanesulfonic acid salt, perfluoromethylbutanesulfonic acid, perfluorohexanesulfonic acid, perfluoroheptanesulfonic acid, and perfluorooctanesulfonic acid. Particularly those having 1 to 8 carbon atoms are preferable. These can be used alone or in

combination of two or more.

The aromatic sulfonic acid can include at least one acid selected from the group consisting of sulfonic acids of monomeric and polymeric aromatic sulfides, sulfonic acids of aromatic carboxylic acids and esters, sulfonic acids of monomeric and polymeric aromatic ethers, sulfonic acids of aromatic sulfonates, monomeric and polymeric aromatic sulfonic acids, sulfonic acids of monomeric and polymeric aromatic sulfones, sulfonic acids of aromatic ketones, heterocyclic sulfonic acids, sulfonic acids of aromatic sulfoxides, and condensates of aromatic sulfonic acids with methylene bonds. These can be used alone or in combination of two or more.

<Component D-5: silicone compound>

The silicone compound used in the present invention preferably has a highly active group, and preferred examples thereof include an alkoxy group or a Si-H group. The content ratio of such a group is preferably in the range of 0.1 to 1.2 mol/100 g, more preferably in the range of 0.12 to 1 mol/100 g, and even more preferably in the range of 0.15 to 0.6 mol/100 g. The ratio is determined by measuring the amount of hydrogen or alcohol generated per unit weight of silicone compound by an alkali decomposition method.

The alkoxy group is preferably an alkoxy group having 1 to 4 carbon atoms. A methoxy group is particularly preferred.

The structure of the silicone compound is generally formed by any combination of the four siloxane units indicated below. Specifically, the units are M units: monofunctional siloxane units such as $(CH_3)_3SiO_{1/2}$, $H(CH_3)_2SiO_{1/2}$, $H_2(CH_3)SiO_{1/2}$, $(CH_3)_2(CH_2{=}CH)SiO_{1/2}$, $(CH_3)_2(C_6H_5)SiO_{1/2}$, and $(CH_3)(C_6H_5)(CH_2{=}CH)SiO_{1/2}$; D units: bifunctional siloxane units such as $(CH_3)_2SiO$, $H(CH_3)SiO$, $H_2SiO$, $H(C_6H_5)SiO$, $(CH_3)(CH_2{=}CH)SiO$, and $(C_6H_5)_2SiO$; T units: trifunctional siloxane units such as $(CH_3)SiO_{3/2}$, $(C3H_7)SiO_{3/2}$, HSiO3/2, (CH2=CH)SiO3/2, and $(C6H_5)SiO_{3/2}$; and Q units: tetrafunctional siloxane units represented by SiO2.

Specific examples of the structure of the silicone compound used in the silicone-based flame retardant include, as rational formulas, Dn, Tp, MmDn, MmTp, MmQq, MmDnTp, MmDnQq, MmTpQq, MmDnTpQq, DnTp, DnQq, and DnTpQq. Among these, preferable structures of the silicone compound are MmDn, MmTp, MmDnTp, and MmDnQq, and more preferable structures are MmDn and MmDnTp.

The coefficients m, n, p, and q in the rational formulas are integers of 1 or greater that represent degree of polymerization of each siloxane unit, and the sum of the coefficients in each rational formula is the average degree of polymerization of the silicone compound. The average degree of polymerization is preferably in the range of 3 to 150, more preferably in the range of 3 to 80, even more preferably in the range of 3 to 60, and particularly preferably in the range of 4 to 40. The more the average degree of polymerization falls within the preferred range, the more excellent the flame retardancy. Further, as described below, silicone compounds comprising a predetermined number of aromatic groups also have excellent transparency and hue. As a result, satisfactory reflected light can be obtained.

When any of m, n, p, and q is a numerical value of 2 or greater, the siloxane unit with the coefficient can be two or more types of siloxane units having different hydrogen atoms or organic residues bonded thereto.

The silicone compound may be linear or may have a branched structure. It is preferable that the organic residue bonded to the silicon atom be an organic residue having 1 to 30 carbon atoms, more preferably 1 to 20 carbon atoms. Specific examples of such an organic residue include alkyl groups such as methyl group, ethyl group, propyl group, butyl group, hexyl group, and decyl group; cycloalkyl groups such as cyclohexyl; aryl groups such as phenyl group; and aralkyl groups such as tolyl group. Alkyl groups having 1 to 8 carbon atoms, alkenyl groups, and aryl groups are more preferable. For alkyl groups, alkyl groups having 1 to 4 carbon atoms, such as methyl group, ethyl group, and propyl group are particularly preferable.

The silicone compound used as the silicone-based flame retardant preferably contains an aryl group. Silane compounds and siloxane compounds used as organic surface treatment agents for titanium dioxide pigments are clearly distinguished from the preferred embodiments of the silicone-based flame retardant, in that those containing no aryl group can achieve a preferable effect. More preferred silicone-based flame retardants are silicone compounds comprising aromatic groups in a ratio (aromatic group amount) of 10 to 70% by weight (more preferably 15 to 60% by weight).

<Component E: anti-drip agent>

The anti-drip agent used as component E in the present invention can include fluorine-containing polymers having fibril formability, and such polymers can include polytetrafluoroethylene, tetrafluoroethylene-based copolymers (for example, tetrafluoroethylene/hexafluoropropylene copolymers), partially fluorinated polymers as shown in U.S. Patent No. 4379910, and polycarbonate resins manufactured from fluorinated diphenols. Among these, polytetrafluoroethylene (hereinafter, sometimes referred to as PTFE) is preferable.

PTFE having fibril formability has an extremely high molecular weight, and shows a tendency to become fibrous through bonding of PTFE molecules by an external action such as shear force. The molecular weight is 1,000,000 to

10,000,000, and more preferably 2,000,000 to 9,000,000 in number average molecular weight determined from standard specific gravity. The PTFE can be used in a solid form or an aqueous dispersion liquid form. The PTFE having fibril formability can improve dispersibility in resins, and a PTFE mixture in a mixed form with another resin can also be used to obtain more satisfactory flame retardancy and mechanical characteristics.

Examples of commercial products of the PTFE having fibril formability can include Teflon™ 6-J from Chemours-Mitsui Fluoroproducts Co., Ltd. and Polyflon MPA FA500H and F-201 from Daikin Industries, Ltd. Commercial products of the aqueous dispersion liquid of PTFE can typically include Fluon D-series manufactured by Daikin Industries, Ltd. and Teflon™ 31-JR from Chemours-Mitsui Fluoroproducts Co., Ltd.

A PTFE in a mixed form obtained by (1) a method of mixing an aqueous dispersion liquid of PTFE with an aqueous dispersion liquid or solution of an organic polymer and coprecipitating the mixture to obtain a co-aggregated mixture (method described Japanese Unexamined Patent Publication (Kokai) No. 60-258263 and Japanese Unexamined Patent Publication (Kokai) No. 63-154744), (2) a method of mixing an aqueous dispersion liquid of PTFE with dried organic polymer particles (method described in Japanese Unexamined Patent Publication (Kokai) No. 4-272957), (3) a method of uniformly mixing an aqueous dispersion liquid of PTFE with an organic polymer particle solution and simultaneously removing the media from the mixture (method described in Japanese Unexamined Patent Publication (Kokai) No. 6-220210 and Japanese Unexamined Patent Publication (Kokai) No. 8-188653), (4) a method of polymerizing a monomer for forming an organic polymer in an aqueous dispersion liquid of PTFE (method described in Japanese Unexamined Patent Publication (Kokai) No. 9-95583), or (5) a method of uniformly mixing an aqueous dispersion liquid of PTFE with an organic polymer dispersion liquid and then polymerizing a vinyl-based monomer in the mixed dispersion liquid to obtain a mixture (method described in Japanese Unexamined Patent Publication (Kokai) No. 11-29679) can be used. Commercial products of the PTFE in a mixed form can include "Metablen A3800" (trade name) and "Metablen A3750" from Mitsubishi Chemical Corporation.

The ratio of PTFE in a mixed form, in 100% by weight of a PTFE mixture, is preferably 1 to 60% by weight of PTFE, and more preferably 5 to 55% by weight. When the ratio of PTFE is in such a range, achieving a satisfactory dispersibility of PTFE may be possible.

Styrene-based monomers as organic polymers used in polytetrafluoroethylene-based mixtures are exemplified by, but are not limited to, styrenes optionally substituted with one or more groups selected from the group consisting of alkyl groups having 1 to 6 carbon atoms, alkoxy groups having 1 to 6 carbon atoms, and halogens, for example, ortho-methylstyrene, meta-methylstyrene, para-methylstyrene, dimethylstyrene, ethyl-styrene, para-tert-butylstyrene, methoxystyrene, fluorostyrene, monobromostyrene, dibromostyrene, and tribromostyrene; vinylxylene, and vinylnaphthalene. The styrene-based monomers can be used independently or by mixing two or more thereof.

The acrylic monomers used as organic polymers used in polytetrafluoroethylene-based mixtures include optionally substituted (meth)acrylate derivatives. Specific acrylic monomers are exemplified by, but are not limited to, (meth)acrylate derivatives optionally substituted with one or more groups selected from the group consisting of alkyl groups having 1 to 20 carbon atoms, cycloalkyl groups having 3 to 8 carbon atoms, aryl groups, and glycidyl groups, for example, (meth)acrylonitrile, methyl (meth)acrylate, ethyl (meth)acrylate, propyl (meth)acrylate, butyl (meth)acrylate, amyl (meth)acrylate, hexyl (meth)acrylate, 2-ethylhexyl (meth)acrylate, cyclohexyl (meth)acrylate, octyl (meth)acrylate, dodecyl (meth)acrylate, phenyl (meth)acrylate, benzyl (meth)acrylate, and glycidyl (meth)acrylate; maleimides optionally substituted with an alkyl group having 1 to 6 carbon atoms or an aryl group, for example, maleimide, N-methylmaleimide, and N-phenyl-maleimide; maleic acid, phthalic acid, and itaconic acid. The acrylic monomers can be used independently or by mixing two or more thereof. Among these, (meth)acrylonitrile is preferable.

In the present invention, coated branched PTFE can be used as the anti-drip agent. A coated branched PTFE is a polytetrafluoroethylene-based mixture consisting of branched polytetrafluoroethylene particles and an organic polymer, and has a coating layer consisting of an organic polymer, preferably a polymer comprising units from a styrene-based monomer and/or units from an acrylic monomer, on the outside of the branched polytetrafluoroethylene. The coating layer is formed on the surface of the branched polytetrafluoroethylene. The coating layer preferably comprises a copolymer of a styrene-based monomer and an acrylic monomer.

The polytetrafluoroethylene contained in the coated branched PTFE is branched polytetrafluoroethylene. If the polytetrafluoroethylene contained is not branched polytetrafluoroethylene, the anti-drip effect is insufficient when the addition of polytetrafluoroethylene is small. The branched polytetrafluoroethylene is particulate and has a particle size of preferably 0.1 to 0.6 μm, more preferably 0.3 to 0.5 μm, and even more preferably 0.3 to 0.4 μm. When the particle size is less than 0.1 μm, surface appearance of a molded article is excellent, but commercial availability of polytetrafluoroethylene having a particle size of less than 0.1 μm is difficult. When the particle size is more than 0.6 μm, the surface appearance of a molded article may be poor. The number average molecular weight of the polytetrafluoroethylene used in the present invention is preferably $1 \times 10^4$ to $1 \times 10^7$, and more preferably $2 \times 10^6$ to $9 \times 10^6$. Generally, polytetrafluoroethylene having a high molecular weight is more preferable in terms of stability. Either a powder or dispersion liquid form can be used.

The content of the branched polytetrafluoroethylene in the coated branched PTFE, relative to a total weight of 100

parts by weight of the coated branched PTFE, is preferably 20 to 60 parts by weight, more preferably 40 to 55 parts by weight, even more preferably 47 to 53 parts by weight, particularly preferably 48 to 52 parts by weight, and most preferably 49 to 51 parts by weight. When the ratio of the branched polytetrafluoroethylene is within such a range, achieving a satisfactory dispersibility of the branched polytetrafluoroethylene may be possible.

The content of the component E, relative to 100 parts by weight of the component A, is preferably 0.05 to 3 parts by weight, more preferably 0.1 to 2 parts by weight, and even more preferably 0.2 to 1.5 parts by weight. A content higher than this range leads to increased costs, and extrusion processability may be insufficient. A content lower than this range results in insufficient flame retardancy, and tensile strength may also be degraded. The ratio of the component E above indicates the net amount of the anti-drip agent, and in the case of PTFE in a mixed form, indicates the net PTFE amount.

<Manufacture of thermoplastic resin composition>

In manufacturing the thermoplastic resin composition of the present invention, any method is adopted. Examples include a method of thoroughly mixing the component A, component B, and optionally other components using a premixing means such as a V-type blender, a Henschel mixer, a mechanochemical apparatus, or an extrusion mixer, then granulating the premixed product as needed by an extrusion granulator or a briquetting machine, then melt-kneading in a melt kneader typified by a vented twin-screw extruder, and then pelletizing with a pelletizer.

Other examples include a method of independently supplying each component to a melt kneader typified by a vented twin-screw extruder and a method of premixing a portion of the components and then supplying the remaining components independently to a melt kneader. Examples of the method of premixing a portion of the components include a method of premixing components other than the component A in advance and then mixing in the thermoplastic resin of component A or directly supplying to an extruder.

Examples of the method of premixing include, when the component A has a powder form, a method of blending a portion of the powder with an additive to be mixed to manufacture a masterbatch of the additive diluted with the powder and then using the masterbatch, and further include a method of independently supplying one component from mid-flow of the melt extruder. When the components to be mixed are liquid, a so-called liquid injection apparatus or liquid addition apparatus can be used to supply the components to the melt extruder.

An extruder that preferably has a vent capable of degassing moisture in the raw materials and volatile gases generated from the melt-kneaded resin can be used. A vacuum pump to efficiently discharge generated moisture and volatile gases from the vent to the outside of the extruder is preferably installed. A screen for removing foreign matter mixed in the extrusion raw materials can also be installed in a zone in front of the extruder die portion to remove foreign matter from the resin composition. Examples of such a screen can include a wire mesh, a screen changer, and a sintered metal plate (such as a disk filter).

Examples of the melt kneader, in addition to a twin-screw extruder, can include a Banbury mixer, a kneading roll, a single-screw extruder, and a multi-screw extruder having three or more screws.

The resin extruded as described above is either directly cut and pelletized, or formed into strands and then cut by a pelletizer and pelletized. When reducing external influences such as dust during pelletization is necessary, purifying the atmosphere surrounding the extruder is preferable. In the production of such pellets, various methods already proposed for polycarbonate resins for use in optical disks can be used to appropriately narrow the shape distribution of the pellets, decrease miscuts, decrease the amount of fine powder generated during transportation or shipping, and decrease air bubbles (vacuum bubbles) generated inside the strands and pellets. These formulations enable high-cycle molding and decrease the occurrence rate of silver-like defects. The shape of the pellets can be any general shape, such as a cylinder, a prism, or a sphere, but is more preferably a cylinder. The diameter of such a cylinder is preferably 1 to 5 mm, more preferably 1.5 to 4 mm, and even more preferably 2 to 3.3 mm. The length of the cylinder is preferably 1 to 30 mm, more preferably 2 to 5 mm, and even more preferably 2.5 to 3.5 mm.

<Regarding molded article>

The thermoplastic resin composition of the present invention can be manufactured into various products generally by injecting molding of pellets obtained in the method described above. In such injection molding, molded products can be obtained using not only general molding methods, but also injection molding methods such as injection compression molding, injection press molding, gas-assisted injection molding, foam molding (including ones by injection of a supercritical fluid), insert molding, in-mold coating molding, heat-insulating die molding, rapid heating-and-cooling die molding, two-color molding, sandwich molding, and high-speed injection molding. The advantages of these various molding methods have been widely known. Further, molding can be selected from either a cold runner system or a hot runner system.

The embodiment of the present invention that is currently considered the best by the present inventors is one that satisfies the preferable range of each of the above requirements, and for example, representative examples thereof are

described in the following Examples. Naturally, the present invention is not limited to these embodiments.

EXAMPLES

The present invention will be further described with reference to the Examples below. However, the present invention is not limited thereto. Note that the following items were evaluated.

(i) Discoloration during residence

Pellets obtained from each composition of the Examples were dried in a hot-air dryer at 100°C for 5 h, and 150 mm × 150 mm × 2 mmt square plates were each continuously molded in 100 shots at the temperatures in the tables with an injection molding machine [Sumitomo Heavy Industries, Ltd. SG150U·S-M IV]. The operation of the molding machine was then interrupted, and resin was left to reside in the cylinder. After 15 min, molding of square plates was resumed, the hue of square plates before and after residence was measured using a color analyzer TC-1800MKII manufactured by Tokyo Denshoku Co., Ltd., and the color difference (ΔE) before and after the residence was calculated.

(ii) Strength retention rate during residence

Square plates used in "(i) Discoloration during residence" were used to carry out a high-speed surface impact test, the fracture energies of square plates before and after residence were measured, and strength retention rates before and after residence were calculated by the formula below. The measurement was carried out using a Hydroshot HTM-1 manufactured by Shimadzu Corporation, under the conditions of 23°C and a test speed of 7 m/s.

Strength retention rate (%) = [fracture energy after residence/fracture energy before residence] × 100

(iii) Recyclability

Square plates before residence used in "(i) Discoloration during residence" were left horizontally outdoors in Midori Ward in the city of Chiba for 1 year, and then pulverized and molded into square plates again. The hue and fracture energies of the square plates before residence and the remolded square plates were measured through the same methods as in "(i) Discoloration during residence" and "(ii) Strength retention ratee during residence", and the color difference (ΔE) and strength retention rate of both were calculated.

(iv) Flame retardancy

Pellets obtained from each composition of the Examples were dried in a hot-air dryer at 100°C for 5 h, UL test pieces having a thickness of 1.5 mm were each continuously molded at the temperatures in the tables with an injection molding machine [Sumitomo Heavy Industries, Ltd. SG150U·S-M IV], and the test pieces were classified into four types: V-0, V-1, V-2, and HB, in accordance with UL94. If flammability is so inferior that no classification is satisfied, the test piece is described as Not-V. Flame retardancy must be classified as one of V-0, V-1, V-2, and HB.

(v) Flexural modulus

Square plates before residence used in "(i) Discoloration during residence" were used to measure the flexural modulus value.

[Examples 1-1 to 1-12, Examples 2-1 to 2-15, Examples 3-1 to 3-13, Comparative Examples 1-1 to 1-5, Comparative Examples 2-1 to 2-3, and Comparative Examples 3-1 to 3-3]

Resin compositions having the blending ratios in Table 1, Table 2, and Table 3 were prepared by the following procedure. Note that the explanation will be provided according to the symbols in the tables below. The components were each weighed in the ratios in the tables and mixed uniformly using a tumbler. The mixture was then loaded into an extruder to prepare a resin composition. The extruder used was a vented twin-screw extruder manufactured by The Japan Steel Works, Ltd.: TEX-30XSST (fully intermeshing, co-rotating, double-threaded screws). Among the organic fillers, glass fiber, tabular glass filler, or fibrous carbon filler was supplied from the second supply port, and other components were supplied from the first supply port. The extrusion conditions included a discharge rate of 20 kg/h, a screw rotational speed of 150 rpm, and a vent vacuum of 3 kPa, and the extrusion temperatures were as indicated in the tables. The resulting pellets were used to mold test pieces for evaluation using an injection molding machine according to the above method. Evaluation

results are shown in Tables 1 to 3. Note that the components denoted by symbols in Tables 1 to 3 are as follows.

(Component A: thermoplastic resin)

A-1-1: aromatic polycarbonate resin (polycarbonate resin powder having a viscosity average molecular weight of 20,700 produced by a conventional method from bisphenol A and phosgene, Panlite L-1225WS (trade name) manufactured by Teijin Limited)
A-1-2: modified polycarbonate resin powder having a viscosity average molecular weight of 22,300 obtained by the manufacturing method below

In a reactor equipped with a thermometer, a stirrer, and a reflux condenser, a mixture of 4229 parts of a 48% sodium hydroxide aqueous solution and 20,000 parts of ion-exchanged water was prepared, 2191 parts of 1,1-bis(4-hydroxy-3-methylphenyl)propane (hereinafter abbreviated as Bis-1), 1951 parts of bisphenol A, and 8.3 parts of hydrosulfite were dissolved therein, 11,620 parts of methylene chloride was then added, and under stirring, 2,200 parts of phosgene was blown in over a period of about 60 min at 15 to 25°C. After the blowing-in of phosgene was completed, 704 parts of 48% sodium hydroxide aqueous solution and 102 parts of p-tert-butylphenol were added, stirring was resumed, after emulsification, 4.32 parts of triethylamine was added, followed by further stirring at 28 to 33°C for 1 h to complete the reaction. After the reaction was completed, the product was diluted with methylene chloride and washed with water, acidified with hydrochloric acid and washed with water, and further washed with water repeatedly until conductivity of the aqueous phase was almost the same as that of the ion-exchanged water to obtain a methylene chloride solution of polycarbonate resin. This solution was then passed through a filter having 0.3-μm openings and further added dropwise into warm water in a kneader with an isolation chamber having a foreign matter outlet in the bearing portion. The polycarbonate resin was made into flakes while methylene chloride was distilled off, and the liquid-containing flakes were then pulverized and dried to obtain a powder.

A-1-3: polycarbonate-polydiorganosiloxane copolymer resin (viscosity average molecular weight of 19,800, PDMS weight of 4.2%, PDMS degree of polymerization of 37)
A-2: ABS resin (SANTAC AT-07 (trade name) manufactured by Nippon A&L Inc., butadiene rubber component of about 17.5% by weight, weight average rubber particle size of 1.2 μm, manufactured by bulk polymerization)
A-3: polyethylene terephthalate (TRN-8550FF (trade name) manufactured by Teijin Limited)
A-4: AS resin (LITAC-A BS-207 (trade name) manufactured by Nippon A&L Inc.)
A-5: PS resin (GP-110 (trade name) manufactured by IRPC Public Company Limited)
A-6: AAS resin (777K (trade name) manufactured by INEOS Ltd.)

(Component B: acidic phosphate ester)

B-1: stearyl acid phosphate (AX-71 (trade name) manufactured by Adeka Corporation, acid value of 158 mgKOH/g)
B-2 (Comparative Example): stearyl acid phosphate (A-18F (trade name) manufactured by Sakai Chemical Industry Co., Ltd., acid value of 215 mgKOH/g)
B-3: stearyl acid phosphate (mixture of B-1 and B-2 (weight ratio of 1:1), acid value of 187 mgKOH/g)

(Component C: inorganic filler)

C-1: glass fiber (3PE937 (trade name) manufactured by Nitto Boseki Co., Ltd.)
C-2: glass flake (MEG160FYX (trade name) manufactured by Nippon Sheet Glass Co., Ltd.)
C-3: carbon fiber (HT C493 (trade name) manufactured by Teijin Limited)
C-4: non-fibrous carbon filler (EN-250HT (trade name) manufactured by Nishimura Graphite Co., Ltd.)
C-5: talc (Victory Light TK-RC (trade name) manufactured by Shokozan Mining Co., Ltd.)

(Component D: flame retardant)

D-1: tetrabromobisphenol A carbonate oligomer (FG-7000 (trade name) manufactured by Teijin Limited)
D-2: phosphate ester mainly composed of resorcinol [di(2,6-dimethylphenyl)phosphate] (PX-200 (trade name) manufactured by Daihachi Chemical Industry Co., Ltd.)
D-3: cyclic phenoxyphosphazene (FP-110 (trade name) manufactured by Fushimi Pharmaceutical Co., Ltd.)
D-4: potassium perfluorobutanesulfonate (F-top KSBF (trade name) manufactured by Mitsubishi Materials Corporation)
D-5: Organosiloxane flame retardant containing Si-H group, methyl group, and phenyl group (X-40-2600J (trade name) manufactured by Shin-Etsu Chemical Co., Ltd.)

(Component E: anti-drip agent)

E-1: polytetrafluoroethylene (Polyflon MP FA500B (trade name) manufactured by Daikin Industries, Ltd.)

[Table 1]

| | | Unit | Example | | | | | | | | | | | | Comparative Example | | | | |
|---|---|---|---|---|---|---|---|---|---|---|---|---|---|---|---|---|---|---|---|
| | | | 1-1 | 1-2 | 1-3 | 1-4 | 1-5 | 1-6 | 1-7 | 1-8 | 1-9 | 1-10 | 1-11 | 1-12 | 1-1 | 1-2 | 1-3 | 1-4 | 1-5 |
| Component A | A-1-1 | Parts by weight | 100 | | | 70 | 70 | 80 | 80 | 70 | 100 | 100 | 100 | 100 | 100 | 70 | 70 | 100 | 100 |
| | A-1-2 | " | | 100 | | | | | | | | | | | | | | | |
| | A-1-3 | " | | | 100 | | | | | | | | | | | | | | |
| | A-2 | " | | | | 30 | | | | | | | | | | 30 | | | |
| | A-3 | " | | | | | 30 | | | | | | | | | | 30 | | |
| | A-4 | " | | | | | | 20 | | | | | | | | | | | |
| | A-5 | " | | | | | | | 20 | | | | | | | | | | |
| | A-6 | " | | | | | | | | 30 | | | | | | | | | |
| Component A total | | " | 100 | 100 | 100 | 100 | 100 | 100 | 100 | 100 | 100 | 100 | 100 | 100 | 100 | 100 | 100 | 100 | 100 |
| Component B | B-1 | " | 0.05 | 0.05 | 0.05 | 0.05 | 0.05 | 0.05 | 0.05 | 0.05 | 0.50 | 0.01 | 0.80 | | | | | 1.50 | |
| | B-2 | " | | | | | | | | | | | | | 0.05 | 0.05 | 0.05 | | |
| | B-3 | " | | | | | | | | | | | | 0.05 | | | | | |
| Processing temperature | Extrusion | °C | 300 | 300 | 300 | 260 | 270 | 260 | 260 | 260 | 300 | 300 | 300 | 300 | 300 | 260 | 270 | 300 | 300 |
| | Molding | °C | 320 | 320 | 320 | 280 | 280 | 280 | 280 | 280 | 320 | 320 | 320 | 320 | 320 | 280 | 280 | 320 | 320 |
| During residence | Color difference | ΔE | 0.7 | 0.9 | 1.3 | 2.1 | 1.8 | 1.8 | 1.2 | 2.2 | 2.2 | 1.2 | 2.7 | 2.5 | 2.7 | 3.8 | 4.6 | 4.1 | 2.7 |
| | Strength retention rate | % | 96 | 97 | 94 | 89 | 88 | 89 | 91 | 87 | 91 | 95 | 88 | 84 | 18 | 70 | 48 | 15 | 18 |
| Recyclability | Color difference | ΔE | 3.1 | 3.3 | 3.8 | 4.8 | 3.9 | 3.3 | 2.9 | 3.8 | 4.8 | 3.9 | 5.4 | 4.8 | 13.1 | 9.1 | 7.8 | 18.8 | 12.3 |
| | Strength retention rate | % | 90 | 91 | 92 | 72 | 82 | 77 | 78 | 82 | 85 | 85 | 71 | 78 | 13 | 43 | 13 | 9 | 8 |

[Table 2]

| | | Unit | Example | | | | | | | | | | | | | | | Comparative Example | | |
|---|---|---|---|---|---|---|---|---|---|---|---|---|---|---|---|---|---|---|---|---|
| | | | 2-1 | 2-2 | 2-3 | 2-4 | 2-5 | 2-6 | 2-7 | 2-8 | 2-9 | 2-10 | 2-11 | 2-12 | 2-13 | 2-14 | 2-15 | 2-1 | 2-2 | 2-3 |
| Component A | A-1-1 | Parts by weight | 100 | 100 | 100 | 70 | 70 | 100 | 100 | 100 | 100 | 100 | 100 | 100 | 100 | 100 | 100 | 100 | 100 | 100 |
| | A-2 | " | | | | 30 | | | | | | | | | | | | | | |
| | A-3 | " | | | | | 30 | | | | | | | | | | | | | |
| Component A total | | " | 100 | 100 | 100 | 100 | 100 | 100 | 100 | 100 | 100 | 100 | 100 | 100 | 100 | 100 | 100 | 100 | 100 | 100 |
| Component B | B-1 | " | 0.05 | 0.01 | 0.8 | 0.05 | 0.05 | 0.05 | 0.1 | 0.3 | 0.05 | 0.05 | 0.05 | 0.05 | 0.05 | 0.05 | | | 1.5 | |
| | B-2 | " | | | | | | | | | | | | | | | | 0.05 | | |
| | B-3 | " | | | | | | | | | | | | | | | 0.05 | | | |
| Component C | C-1 | " | 30 | 30 | 30 | 30 | 30 | 5 | 60 | 130 | 30 | 30 | | | | | 30 | 30 | 30 | 30 |
| | C-2 | " | | | | | | | | | | | 30 | | | | | | | |
| | C-3 | " | | | | | | | | | | | | 20 | | | | | | |
| | C-4 | " | | | | | | | | | | | | | 30 | | | | | |
| | C-5 | " | | | | | | | | | | | | | | 15 | | | | |
| Component D | D-1 | " | | | | | | | | | 20 | | | | | | | | | |
| | D-2 | " | | | | | | | | | | 10 | | | | | | | | |
| Component E | E-1 | " | | | | | | | | | 0.4 | 0.4 | | | | | | | | |
| Processing temperature | Extrusion | °C | 300 | 300 | 300 | 260 | 270 | 300 | 300 | 300 | 260 | 270 | 300 | 300 | 300 | 300 | 300 | 300 | 300 | 300 |
| | Molding | °C | 320 | 320 | 320 | 280 | 280 | 320 | 320 | 320 | 280 | 290 | 320 | 320 | 320 | 320 | 320 | 320 | 320 | 320 |
| During residence | Strength retention rate | % | 95 | 87 | 82 | 85 | 81 | 97 | 80 | 71 | 85 | 81 | 88 | 91 | 83 | 90 | 75 | 41 | 47 | 40 |
| Recyclability | Strength retention rate | % | 87 | 80 | 75 | 61 | 74 | 90 | 77 | 60 | 69 | 76 | 82 | 80 | 74 | 85 | 69 | 41 | 43 | 31 |
| Flame retardancy | UL-94 | | HB | HB | HB | HB | HB | HB | HB | HB | V-0 | V-0 | HB | HB | HB | HB | HB | Not-V | Not-V | Not-V |
| Rigidity | Flexural modulus | MPa | 5900 | 5800 | 5900 | 5800 | 5900 | 3100 | 8600 | 12200 | 5200 | 5300 | 5400 | 11200 | 7100 | 4400 | 5300 | 5000 | 5100 | 5100 |

[Table 3]

| | | Unit | Example | | | | | | | | | | | | | Comparative Example | | |
|---|---|---|---|---|---|---|---|---|---|---|---|---|---|---|---|---|---|---|
| | | | 3-1 | 3-2 | 3-3 | 3-4 | 3-5 | 3-6 | 3-7 | 3-8 | 3-9 | 3-10 | 3-11 | 3-12 | 3-13 | 3-1 | 3-2 | 3-3 |
| Component A | A-1-1 | Parts by weight | 100 | 70 | 70 | 100 | 100 | 100 | 100 | 100 | 100 | 100 | 100 | 100 | 100 | 100 | 100 | 100 |
| | A-2 | " | | 30 | | | | | | | | | | | | | | |
| | A-3 | " | | | 30 | | | | | | | | | | | | | |
| Component A total | | " | 100 | 100 | 100 | 100 | 100 | 100 | 100 | 100 | 100 | 100 | 100 | 100 | 100 | 100 | 100 | 100 |
| Component B | B-1 | " | 0.05 | 0.05 | 0.05 | 0.05 | 0.05 | 0.05 | 0.05 | 0.05 | 0.50 | 0.80 | 0.01 | | 0.05 | | 1.5 | |
| | B-2 | " | | | | | | | | | | | | | | 0.05 | | |
| | B-3 | " | | | | | | | | | | | | 0.05 | | | | |
| Component D | D-1 | " | 10 | 10 | 10 | 20 | | | | | 10 | 10 | 10 | 10 | 10 | 10 | 10 | 10 |
| | D-2 | " | | | | | 10 | | | | | | | | | | | |
| | D-3 | " | | | | | | 10 | | | | | | | | | | |
| | D-4 | " | | | | | | | 0.1 | | | | | | | | | |
| | D-5 | " | | | | | | | | 1 | | | | | | | | |
| Component E | E-1 | " | 0.4 | 0.4 | 0.4 | 0.4 | 0.4 | 0.4 | 0.4 | 0.4 | 0.4 | 0.4 | 0.4 | 0.4 | | 0.4 | 0.4 | 0.4 |
| Processing temperature | Extrusion | °C | 290 | 260 | 260 | 260 | 270 | 260 | 300 | 300 | 290 | 290 | 290 | 290 | 290 | 290 | 290 | 290 |
| | Molding | °C | 310 | 280 | 280 | 280 | 290 | 280 | 320 | 320 | 310 | 310 | 310 | 310 | 310 | 310 | 310 | 310 |
| During residence | Color difference | ΔE | 1.1 | 1.7 | 2.0 | 2.2 | 2.0 | 1.3 | 1.3 | 2.3 | 1.2 | 1.2 | 1.5 | 2.3 | 1.5 | 3.5 | 4.0 | 2.7 |
| | Strength retention rate | % | 91 | 92 | 84 | 80 | 85 | 88 | 91 | 83 | 92 | 91 | 88 | 90 | 85 | 21 | 18 | 19 |

(continued)

| | | Unit | Example | | | | | | | | | | | | | Comparative Example | | |
|---|---|---|---|---|---|---|---|---|---|---|---|---|---|---|---|---|---|---|
| | | | 3-1 | 3-2 | 3-3 | 3-4 | 3-5 | 3-6 | 3-7 | 3-8 | 3-9 | 3-10 | 3-11 | 3-12 | 3-13 | 3-1 | 3-2 | 3-3 |
| Recyclability | Color difference | ΔE | 4.0 | 4.8 | 4.6 | 6.0 | 2.6 | 2.8 | 3.0 | 4.4 | 3.9 | 3.9 | 4.0 | 5.6 | 3.8 | 13.5 | 16.6 | 14.8 |
| | Strength retention rate | % | 71 | 65 | 73 | 78 | 79 | 80 | 89 | 83 | 77 | 77 | 73 | 70 | 72 | 10 | 13 | 9 |
| Flame retardancy | UL-94 | | V-0 | V-0 | V-0 | V-0 | V-0 | V-0 | V-0 | V-0 | V-0 | V-0 | V-0 | V-0 | V-1 | V-0 | V-0 | V-0 |

## Claims

1. A thermoplastic resin composition containing, 100 parts by weight of (A) a thermoplastic resin (component A), and 0.001 to 1 part by weight of (B) an acidic phosphate ester (component B) having an acid value of 10 to 200 mgKOH/g.

2. The thermoplastic resin composition according to claim 1, containing, relative to 100 parts by weight of the component A, 1 to 150 parts by weight of (C) an inorganic filler (component C).

3. The thermoplastic resin composition according to claim 1 or 2, containing, relative to 100 parts by weight of the component A, 0.01 to 25 parts by weight of (D) a flame retardant (component D).

4. The thermoplastic resin composition according to any one of claims 1 to 3, containing, relative to 100 parts by weight of the component A, 0.05 to 3 parts by weight of (E) an anti-drip agent (component E).

5. The thermoplastic resin composition according to any one of claims 1 to 4, wherein the component A is at least one thermoplastic resin selected from the group consisting of (A-1) a polycarbonate resin (component A-1), (A-2) an ABS resin (component A-2), (A-3) a polyester resin (component A-3), (A-4) an AS resin (component A-4), (A-5) a PS resin (component A-5), and (A-6) an AAS resin (component A-6).

6. The thermoplastic resin composition according to any one of claims 1 to 5, wherein the component A is at least one thermoplastic resin selected from the group consisting of (A-1) a polycarbonate resin (component A-1), (A-2) an ABS resin (component A-2), and (A-3) a polyester resin (component A-3).

7. The thermoplastic resin composition according to any one of claims 1 to 6, wherein a content of the component A-1 is 40 to 100 parts by weight in 100 parts by weight of the component A.

8. The thermoplastic resin composition according to any one of claims 1 to 7, wherein the component B is stearyl acid phosphate.

9. The thermoplastic resin composition according to any one of claims 1 to 8, wherein the component C is at least one inorganic filler selected from the group consisting of (C-1) a glass fiber (component C-1), (C-2) a tabular glass filler (component C-2), (C-3) a fibrous carbon filler (component C-3), (C-4) a non-fibrous carbon filler (component C-4), and (C-5) a silicate mineral (component C-5).

10. The thermoplastic resin composition according to any one of claims 1 to 9, wherein the component D is at least one flame retardant selected from the group consisting of (D-1) a halogenated carbonate compound (component D-1), (D-2) a phosphate ester-based compound (component D-2), (D-3) a phosphazene compound (component D-3), (D-4) a metal sulfonate (component D-4), and (D-5) a silicone compound (component D-5).

11. A molded article formed of the thermoplastic resin composition according to any one of claims 1 to 10.

## INTERNATIONAL SEARCH REPORT

International application No.
**PCT/JP2023/030272**

**A. CLASSIFICATION OF SUBJECT MATTER**

***C08L 101/00***(2006.01)i; ***C08K 3/013***(2018.01)i; ***C08K 5/521***(2006.01)i; ***C08K 7/02***(2006.01)i; ***C08L 25/06***(2006.01)i; ***C08L 25/12***(2006.01)i; ***C08L 55/02***(2006.01)i; ***C08L 67/00***(2006.01)i; ***C08L 69/00***(2006.01)i
FI: C08L101/00; C08K5/521; C08L69/00; C08L55/02; C08L67/00; C08L25/12; C08L25/06; C08K3/013; C08K7/02

According to International Patent Classification (IPC) or to both national classification and IPC

**B. FIELDS SEARCHED**

Minimum documentation searched (classification system followed by classification symbols)

C08L101/00; C08K3/013; C08K5/521; C08K7/02; C08L25/06; C08L25/12; C08L55/02; C08L67/00; C08L69/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2006-306960 A (TEIJIN CHEM. LTD.) 09 November 2006 (2006-11-09) paragraphs [0121], [0129], [0176]-[0179], [0181], [0185], table 1, example 6 | 1-11 |
| Y | | 4, 9 |
| X | JP 2020-83932 A (TEIJIN LTD.) 04 June 2020 (2020-06-04) paragraphs [0081], [0134], [0136], table 2, example 1 | 1-3, 5-11 |
| Y | | 4, 9 |
| X | JP 2019-206655 A (TOYO INK SC HOLDINGS CO., LTD.) 05 December 2019 (2019-12-05) paragraphs [0014], [0074]-[0080], table 1, metal oxide particle dispersion X-10, table 3, example 14 | 1-3, 5-7, 10, 11 |
| Y | | 4, 9 |
| A | | 8 |
| Y | JP 2011-219553 A (TEIJIN CHEM. LTD.) 04 November 2011 (2011-11-04) paragraphs [0009], [0087], [0093] | 4 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 October 2023** | **31 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/030272**

| Patent document cited in search report | Publication date (day/month/year) | Patent family member(s) | Publication date (day/month/year) |
|---|---|---|---|
| JP 2006-306960 A | 09 November 2006 | (Family: none) | |
| JP 2020-83932 A | 04 June 2020 | (Family: none) | |
| JP 2019-206655 A | 05 December 2019 | (Family: none) | |
| JP 2011-219553 A | 04 November 2011 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 4983427 B
- JP 5640734 B
- JP 6172508 A
- JP 8027370 A
- JP 2001055435 A
- JP 2002117580 A
- US 4379910 A
- JP 60258263 A
- JP 63154744 A
- JP 4272957 A
- JP 6220210 A
- JP 8188653 A
- JP 9095583 A
- JP 11029679 A